# EUROPEAN PATENT SPECIFICATION

(11) **EP 2 829 556 B1**
(45) Date of publication and mention of the grant of the patent: **16.11.2016**
(21) Application number: 13177881.3
(22) Date of filing: 24.07.2013
(51) Int. Cl.: C08F 110/06, C08F 4/657, C08F 4/6592

(54) **PROCESS**
VERFAHREN
PROCÉDÉ

(43) Date of publication of application: 28.01.2015
(73) Proprietor: Borealis AG, 1220 Vienna (AT)
(72) Inventor: Resconi, Luigi, 44100 Ferrara (IT); Töltsch, Wilfried, 4614 Marchtrenk (AT); Ajellal, Noureddine, 00970 Helsinki (FI); Virkkunen, Ville, 00790 Helsinki (FI); Lehtiniemi, Ismo, 04500 Kellokoski (FI)
(74) Representative: Campbell, Neil Boyd

(56) References cited:
- EP-A1- 1 471 085
- WO-A1-98/58976
- WO-A1-2009/054832
- WO-A1-2012/084961
- WO-A1-2013/007650
- WO-A2-2011/135004
- WO-A2-2011/135005
- US-A1- 2008 081 887

## Description

The present invention relates to a process for producing a multimodal polypropylene homopolymer using a single site catalyst in a multistage polymerisation process. In particular, the invention relates to a process where catalyst productivity and activity in the gas phase is enhanced in a slurry bulk-gas phase polymerisation cascade.

This is achieved through the use of a particular metallocene complex along with an aluminoxane and a boron based cocatalyst. The catalyst is in solid form but is free of an external carrier. This combination remarkably gives rise to catalysts which offer surprising properties in the context of a slurry bulk/gas phase polymerisation.

### Background

Multistage polymerisation processes are well known and widely used in the art for polymerising polypropylene. Process configurations containing at least one slurry phase polymerisation reactor and at least one gas phase polymerisation reactor are disclosed e.g. in US4740550, and further e.g. in WO98/058975 and WO98/058976. A prepolymerisation reactor is often included in the process configuration, typically to maximise catalyst performance. The use of prepolymerisation also avoids overheating the catalyst particles. Prepolymerisation also helps to ensure a more even polymerisation on the catalyst particles reducing the probability of creating fines in later reaction steps.

Single site catalysts have been used to manufacture polyolefins for many years. Countless academic and patent publications describe the use of these catalysts in olefin polymerisation. One big group of single site catalysts are metallocenes, which are nowadays used industrially and polyethylenes and polypropylenes in particular are often produced using cyclopentadienyl based catalyst systems with different substitution patterns.

Single site catalysts are used in propylene polymerisation in order to achieve some desired polymer properties. However, there are some problems in using single site catalysts on industrial scale in multistage polymerisation configurations and thus, there is room for improving the process and catalyst behaviour in the process.

In slurry and gas phase processes alike, catalysts need to be made of solid, uniform particles of appropriate particle size, morphology and mechanical stability to avoid reactor fouling, sheeting and line plugging. The use therefore of a catalyst support is common place. Metallocenes are conventionally supported on a carrier such as silica, for example. The use however of supported catalysts is associated with problems such as silica residues in the final product. Further, there is still room for improved activity and improved polymer particle formation.

In WO03/051934, the inventors proposed an alternative form of catalyst which is provided in solid form but does not require a conventional external carrier material such as silica. The invention is based on the finding that a homogeneous catalyst system containing an organometallic compound of a transition metal can be converted, in a controlled way, to solid, uniform catalyst particles by first forming a liquid/liquid emulsion system, which comprises as the dispersed phase, said solution of the homogeneous catalyst system, and as the continuous phase a solvent immiscible therewith, and then solidifying said dispersed droplets to form solid particles comprising the said catalyst.

The invention described in WO03/051934 enabled the formation of solid spherical catalyst particles of said organotransition metal catalyst without using e.g. external porous carrier particles, such as silica, normally required in the art. Thus, problems relating to catalyst silica residues can be solved by this type of catalyst. Further, it could be seen that catalyst particles having improved morphology, will give, due to the replica effect, polymer particles having improved morphology as well.

Some multistage polymerisations utilise a slurry then gas phase set up. One of the possible limitations of polymerization catalysts in general, and of metallocene-based catalysts in particular, is that when the catalyst has a high activity in slurry, e.g. bulk, the activity in gas phase is often low. This makes it difficult to achieve a low bulk-to-gas phase ratio of the produced material (the so-called bulk/GP split). In other words, strong (initial) activity in the bulk step can lead to faster catalyst deactivation, in turn leading to a poorly active catalyst in the gas phase reactor.

To be relevant for industrial polypropylene production, a single site catalyst must have good performance under all polymerisation conditions, in particular in conditions, where polymerisation temperature is at least 60°C, and in all actual polymerisation reactors of the multistage process including both liquid (ideally bulk slurry) and gas phase reactors. The present invention tries to address this issue.

The present inventors have now found a new class of olefin polymerisation catalysts, which are able to solve the problems disclosed above. In particular, the invention combines the use of boron based and aluminoxane cocatalysts in solid catalysts not containing any external support material, essentially prepared using the basic principles of WO03/051934.

The invention provides a solid catalyst material, where no silica support material is used and which exhibits remarkable increase in activity in the gas phase in a slurry - gas phase polymerisation cascade. This process also avoids any problems relating to the use of the conventionally supported catalysts, such as silica supported catalysts without prejudicing activity and productivity.

Whilst both boron based and aluminoxane cocatalysts are well known in the art, they are typically used as alternatives. However, it is also known to use boron activators together with aluminoxanes in some circumstances.

EP-A-0574258 discloses use of boron compounds together with aluminoxanes in single site catalysts. The catalysts are homogeneous, however, and they are used in homogeneous polymerisation where activity increase could be observed.

In J Macromol. Chem Phys, 199, 2409-2416 (1998), there is a disclosure of the use of constrained geometry metallocene type catalysts with both a methyl aluminoxane and trispentafluorophenyl boron activator. In the context of solution phase polyethylene polymerisation, the blend was found to increase catalyst activity. In the literature, there are also other similar observations, that homogeneous catalyst activity (solution phase polymerisation) was improved by using boron modification, but when heterogeneous catalysis was tried, i.e. when catalysts were supported on silica, activity was lower than that achieved using MAO activators alone.

However, WO1998/040418 discloses that when specific types of boron-compounds, in particular alkyl or aryl boronic acids (RB(OR')₂) or cyclic boron compounds, boroxanes, are used with silica supported metallocene catalysts in combination with aluminoxanes, higher activity was seen for ethylene-butene polymerisation.

US2011294972 discloses the use of catalysts of specific transition metal complexes comprising mono-anionic, bidentate triazole ligands in combination with MAO and borate type activators supported on silica in ethylene-butene polymerisation.

In Macromol. Chem. Phys. 200, 2127-2135 (1999*) page 2128,* propylene polymerisation is discussed using a bridged biscyclopentadienyl type catalyst in the presence of both MAO and dimethylanilinium tetrakis(pentafluorophenyl) borate. When the metallocene is activated with MAO alone, there is a change in the polymer melting point (Tₘ). In this case, the presence of both MAO and the boron activator decreased the melting point which is the opposite of the result in the present invention. It is surprising that the combination covered in the present invention allows an increase in melting point therefore.

WO 2009/054832 discloses a bridged metallocene catalyst system. Mixtures of cocatalysts comprise aluminoxanes and a ionic compound and/or a Lewis acid.

The present inventors have surprisingly found that the use of both boron based cocatalysts, especially borates, and aluminoxane cocatalysts in combination in a solid, but unsupported, metallocene catalyst, allows the formation of a catalyst which address the issue of the slurry bulk to gas phase split in the context of a propylene homopolymer.

By using the modified catalysts of the present invention, a gas phase step with very high activity can be obtained, much higher than the activity of similar catalysts without borate modification.

The advantage of having high activity in gas phase is not only in the higher overall productivity of the process, but also in the achievable range of polymer properties: for example, a higher gas phase split enables the production of polypropylenes with broader molecular weight distribution. Further, an increase in melt temperature Tₘ is achieved using the process of the invention.

### Summary of Invention

Thus viewed from one aspect the invention provides a process for the preparation of a propylene homopolymer in a multistage polymerisation process in the presence of a single site catalyst, said process comprising:
(I) in a slurry polymerisation step, polymerising propylene in the presence of said single site catalyst; and subsequently
(II) in a gas polymerisation step polymerising propylene in the presence of catalyst and polymer from step (I) so as to form a propylene homopolymer;
wherein said catalyst comprises
(i) a metallocene complex of a Group 4 metal, said metallocene comprising at least two cyclopentadienyl type ligands;
(ii) a boron based cocatalyst; and
(iii) an aluminoxane cocatalyst;
said catalyst being in solid form, preferably in solid particulate form, and being free from an external carrier.

Preferably, step (I) is a bulk step and the bulk-to-gas phase ratio of the produced material (bulk/GP split) is lower than 80:20, or even lower than 60:40 (i.e. at least 20 wt% of the produced polymer, preferably at least 40 wt% of the produced polymer is formed in the gas phase steps(s)). Ideal polymerisation temperatures are ≥70°C.

Viewed from another aspect the invention provides a process for the preparation of a propylene homopolymer in a multistage polymerisation process in the presence of a single site catalyst, said process comprising:
(Ia) prepolymerising a single site catalyst in the presence of propylene;
(Ib) in a slurry polymerisation step, polymerising propylene with the prepolymerised catalyst of step (Ia); and subsequently
(II) in a gas polymerisation step polymerising propylene in the presence of catalyst and polymer from step (Ib) so as to form a propylene homopolymer;
wherein said catalyst comprises
(i) a metallocene complex of a Group 4 metal, said metallocene comprising at least two cyclopentadienyl type ligands;
(ii) a boron based cocatalyst; and
(iii) an aluminoxane cocatalyst;
said catalyst being in solid form, preferably in solid particulate form, and being free from an external carrier.

Preferably the boron based cocatalysts are borate-type cocatalysts.

Ideally, the solid catalyst of the invention is obtainable by a process in which
(a) a liquid/liquid emulsion system is formed, said liquid/liquid emulsion system comprising a solution of the catalyst components (i) to (iii) dispersed in a solvent so as to form dispersed droplets; and
(b) solid particles are formed by solidifying said dispersed droplets.

Preferably, the process for obtaining the solid catalyst of the invention further involves a catalyst prepolymerisation step ("off-line prepolymerisation") (c) wherein the solid catalyst from step (b) is prepolymerised with at least one alpha-olefin monomer and optionally one or more C₃-C₁₀ alpha-olefin comonomers. Ideally this off-line prepolymerisation of the catalyst is effected using propylene.

Viewed from another aspect the invention provides a homopolymer obtained by a process as hereinbefore defined.

### Definitions

The catalysts of the invention are solid but do not contain an external carrier. By external carrier is meant a support such as silica or alumina on which a metallocene might be carried. The solid catalyst of the invention is designed for use in heterogeneous polymerisations. Catalysts in heterogeneous polymerisation stay essentially in solid form in the reaction medium under the polymerisation conditions.

The term polypropylene homopolymer refers to a polymer in which propylene forms the only monomer unit present.

### Detailed Description of the Invention

### Metallocene Complex

The invention can be effected with any metallocene complex of a Group 4 metal having at least two cyclopentadienyl type ligands.

The cyclopentadienyl type group ligand has been widely described in the scientific and patent literature for about fifty years. Essentially any ligand containing the general structure: 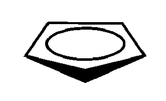 can be employed herein.

The cyclopentadienyl type ligand can be an unsubstituted or substituted and/or fused cyclopentadienyl ligand, e.g. substituted or unsubstituted cyclopentadienyl, substituted or unsubstituted indenyl, substituted or unsubstituted tetrahydroindenyl or substituted or unsubstituted fluorenyl ligand.

Suitable ligands therefore include: 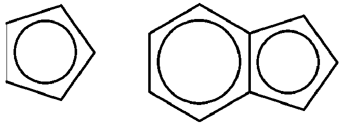 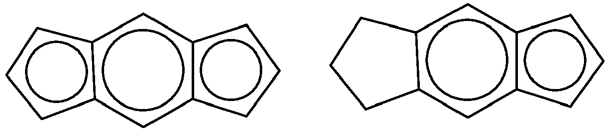 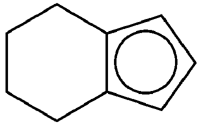 which can obviously be substituted. The use of indenyl ligands is preferred. The metallocene complex of the invention should not therefore comprise a single cyclopentadienyl type ligand. Preferably two such cyclopentadienyl type ligands are present, ideally joined by a bridging group. The substitution pattern on the two ligands may be the same or different. Metallocenes of use in this invention can therefore be symmetrical or asymmetrical.

The two cyclopentadienyl ligands of the present invention can be bridged or unbridged as is well known in the art. It is generally envisaged that the principles of this invention can be applied to any bis cyclopentadienyl type ligand system.

The metallocene complex will comprise at least one metal ion of Group 4 as is well known. This will be η-bonded to the cyclopentadienyl type rings. Such η-bonded metals are typically Zr, Hf or Ti, especially Zr or Hf.

In a preferred embodiment the metallocene complex is a compound of formula (I)

(Cp)₂RₙMX₂ (I)

wherein:
each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand;
the optional one or more substituent(s) being independently selected preferably from halogen, hydrocarbyl (e.g. C1-C20-alkyl, C2-C20-alkenyl, C2-C20-alkynyl, C3-C12-cycloalkyl, C6-C20-aryl or C7-C20-arylalkyl), C3-C12-cycloalkyl which contains 1, 2, 3 or 4 heteroatom(s) in the ring moiety, C6-C20-heteroaryl, C1-C20-haloalkyl, -SiR"₃, -OSiR"₃, -SR", -PR"₂, OR" or -NR"₂,
each R" is independently a hydrogen or hydrocarbyl, e.g. C1-C20-alkyl, C2-C20-alkenyl, C2-C20-alkynyl, C3-C12-cycloalkyl or C6-C20-aryl; or e.g. in case of -NR"₂, the two substituents R" can form a ring, e.g. five- or six-membered ring, together with the nitrogen atom to which they are attached;
R is a bridge of 1-7 atoms, e.g. a bridge of 1-4 C-atoms and 0-4 heteroatoms, wherein the heteroatom(s) can be e.g. Si, Ge and/or O atom(s), wherein each of the bridge atoms may bear independently substituents, such as C1-C20-alkyl, tri(C1-C20-alkyl)silyl, tri(C1-C20-alkyl)siloxy or C6-C20-aryl substituents); or a bridge of 1-3, e.g. one or two, hetero atoms, such as silicon, germanium and/or oxygen atom(s), e.g. -SiR¹⁰₂-, wherein each R¹⁰ is independently C1-C20-alkyl, C3-12cycloalkyl, C6-C20-aryl or tri(C1-C20-alkyl)silyl- residue, such as trimethylsilyl;
M is a transition metal of Group 4, e.g. Ti, Zr or Hf, especially Zr or Hf;
each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", -PR"₃, -SiR"₃,-OSiR"₃, -NR"₂ or -CH₂-Y, wherein Y is C6-C20-aryl, C6-C20-heteroaryl, C1-C20-alkoxy, C6-C20-aryloxy, NR"₂, -SR", -PR"₃, -SiR"₃, or -OSiR"₃;
each of the above mentioned ring moieties alone or as a part of another moiety as the substituent for Cp, X, R" or R¹ can further be substituted e.g. with C1-C20-alkyl which may contain Si and/or O atoms;
n is 0 or 1.

Suitably, in each X as -CH₂-Y, each Y is independently selected from C6-C20-aryl, NR"₂, -SiR"₃ or -OSiR"₃. Most preferably, X as -CH₂-Y is benzyl. Each X other than -CH₂-Y is independently halogen, C1-C20-alkyl, C1-C20-alkoxy, C6-C20-aryl, C7-C20-arylalkenyl or -NR"₂ as defined above, e.g. -N(C1-C20-alkyl)₂.

Preferably, each X is halogen, methyl, phenyl or -CH₂-Y, and each Y is independently as defined above.

Cp is preferably cyclopentadienyl, indenyl, tetrahydroindenyl or fluorenyl, optionally substituted as defined above. Ideally Cp is a cyclopentadienyl or indenyl.

In a suitable subgroup of the compounds of formula (I), each Cp independently bears 1, 2, 3 or 4 substituents as defined above, preferably 1, 2 or 3, such as 1 or 2 substituents, which are preferably selected from C1-C20-alkyl, C6-C20-aryl, C7-C20-arylalkyl (wherein the aryl ring alone or as a part of a further moiety may further be substituted as indicated above), -OSiR"₃, wherein R" is as indicated above, preferably C1-C20-alkyl.

R, if present, is preferably a methylene, ethylene or a silyl bridge, whereby the silyl can be substituted as defined above, e.g. a (dimethyl)Si=, (methylphenyl)Si=, (methyylcyclohexyl)silyl= or (trimethylsilylmethyl)Si=; n is 0 or 1. Preferably, R" is other than hydrogen.

A specific subgroup includes the well known metallocenes of Zr, Hf and Ti with two eta5-ligands which may be bridged or unbridged cyclopentadienyl ligands optionally substituted with e.g. siloxy, or alkyl (e.g. C1-6-alkyl) as defined above, or with two unbridged or bridged indenyl ligands optionally substituted in any of the ring moieties with e.g. siloxy or alkyl as defined above, e.g. at 2-, 3-, 4- and/or 7-positions. Preferred bridges are ethylene or -SiMe₂.

The preparation of the metallocenes can be carried out according or analogously to the methods known from the literature and is within skills of a person skilled in the field. Thus for the preparation see e.g. EP-A-129 368, examples of compounds wherein the metal atom bears a -NR"₂ ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

In a more preferred embodiment, the metallocene of the invention is 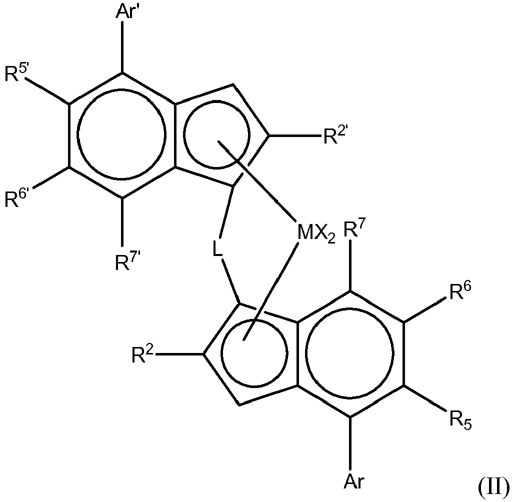 wherein
M is zirconium or hafnium;
each X is a sigma ligand;
L is a divalent bridge selected from -R'₂C-, -R'₂C-CR'₂-, -R'₂Si-, -R'₂Si-SiR'₂-, -R'₂Ge-, wherein each R' is independently a hydrogen atom, C₁-C₂₀-hydrocarbyl, tri(C₁-C₂₀-alkyl)silyl, C₆-C₂₀-aryl, C₇-C₂₀-arylalkyl or C₇-C₂₀-alkylaryl;
R² and R^{2'} are each independently a C₁-C₂₀ hydrocarbyl radical optionally containing one or more heteroatoms from groups 14-16;
R⁵ and R^{5'} are each independently hydrogen, C₁₋₂₀ hydrocarbyl group optionally containing one or more heteroatoms from groups 14-16 and optionally substituted by one or more halo atoms;
R⁶ and R^{6'} are each independently hydrogen or a C₁₋₂₀ hydrocarbyl group optionally containing one or more heteroatoms from groups 14-16; or
R⁵ and R⁶ taken together can form a 5 or 6 membered saturated or unsaturated carbon ring fused to the 6-membered ring of the indenyl group; or
R^{5'} and R^{6'} taken together can form a 5 or 6 membered saturated or unsaturated carbon ring fused to the 6-membered ring of the indenyl group;
R⁷ and R^{7'} are each independently hydrogen or C₁₋₂₀ hydrocarbyl group optionally containing one or more heteroatoms from groups 14-16;
Ar is independently an aryl or heteroaryl group having up to 20 carbon atoms optionally substituted by one or more groups R¹;
Ar' is independently an aryl or heteroaryl group having up to 20 carbon atoms optionally substituted by one or more groups R¹;
each R¹ is a C₁₋₂₀ hydrocarbyl group or two R¹ groups on adjacent carbon atoms taken together can form a fused 5 or 6 membered non aromatic ring with the Ar group, said ring being itself optionally substituted with one or more groups R⁴; and
each R⁴ is a C₁₋₂₀ hydrocarbyl group.

More preferably, the complex is of formula (III) 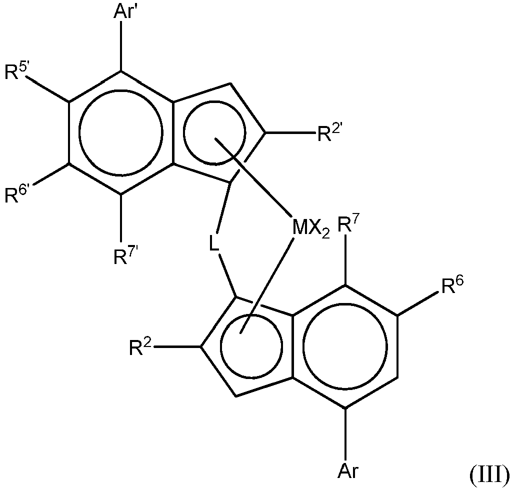 wherein
M is zirconium or hafnium;
each X is a sigma ligand;
L is a divalent bridge selected from -R'₂C-, -R'₂C-CR'₂-, -R'₂Si-, -R'₂Si-SiR'₂-, -R'₂Ge-, wherein each R' is independently a hydrogen atom, C₁-C₂₀-hydrocarbyl, tri(C₁-C₂₀-alkyl)silyl, C₆-C₂₀-aryl, C₇-C₂₀-arylalkyl or C₇-C₂₀-alkylaryl;
R² and R^{2'} are each independently a C₁-C₂₀ hydrocarbyl radical optionally containing one or more heteroatoms from groups 14-16;
R^{5'} is a C₁₋₂₀ hydrocarbyl group optionally containing one or more heteroatoms from groups 14-16 and optionally substituted by one or more halo atoms;
R⁶ and R^{6'} are each independently hydrogen or a C₁₋₂₀ hydrocarbyl group optionally containing one or more heteroatoms from groups 14-16;
R⁷ and R^{7'} are each independently hydrogen or C₁₋₂₀ hydrocarbyl group optionally containing one or more heteroatoms from groups 14-16;
Ar is independently an aryl or heteroaryl group having up to 20 carbon atoms optionally substituted by one or more groups R¹;
Ar' is independently an aryl or heteroaryl group having up to 20 carbon atoms optionally substituted by one or more groups R¹;
each R¹ is a C₁₋₂₀ hydrocarbyl group or two R¹ groups on adjacent carbon atoms taken together can form a fused 5 or 6 membered non aromatic ring with the Ar group, said ring being itself optionally substituted with one or more groups R⁴; and
each R⁴ is a C₁₋₂₀ hydrocarbyl group.

The complexes of the invention are preferably asymmetrical. That means simply that the two indenyl ligands forming the metallocene are different, that is, each indenyl ligand bears a set of substituents that are either chemically different, or located in different positions with respect to the other indenyl ligand. More precisely, they are chiral, racemic bridged bisindenyl metallocenes. Whilst the complexes of the invention may be in their syn configuration ideally, they are in their anti configuration. For the purpose of this invention, racemic-anti means that the two indenyl ligands are oriented in opposite directions with respect to the cyclopentadienyl-metal-cyclopentadienyl plane, while racemic-syn means that the two indenyl ligands are oriented in the same direction with respect to the cyclopentadienyl-metal-cyclopentadienyl plane, as shown in the Figure below.

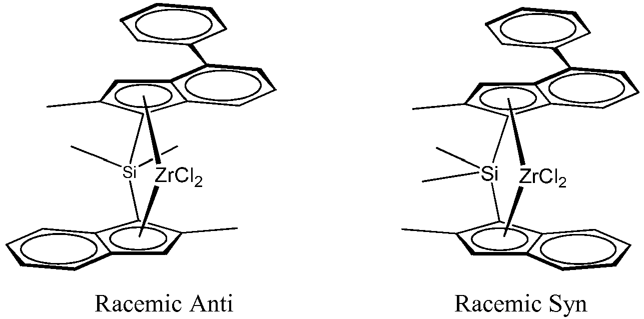

Formula (III) is intended to cover both syn and anti configurations, preferably anti. It is required in addition in compounds of formula (III), that the group R^{5'} is not hydrogen where the 5-position in the other ligand carries a hydrogen.

In fact, the metallocenes of the invention are ideally *C*₁-symmetric but they maintain a pseudo-*C*₂-symmetry since they maintain *C*₂-symmetry in close proximity of the metal center, although not at the ligand periphery. As will be seen, the use of two different indenyl ligands as described in this invention allows for a much finer structural variation, hence a more precise tuning of the catalyst performance, compared to the typical *C*₂-symmetric catalysts. By nature of their chemistry, both anti and syn enantiomer pairs are formed during the synthesis of the complexes. However, by using the ligands of this invention, separation of the preferred anti isomers from the syn isomers is straightforward.

It is preferred if the metallocenes of the invention are employed as the rac anti isomer. Ideally therefore at least 95% mol, such as at least 98% mol, especially at least 99% mol of the metallocene is in the racemic anti isomeric form.

In the catalysts of the invention:
M is preferably Zr.

Each X, which may be the same or different, is preferably a hydrogen atom, a halogen atom, a R, OR, OSO₂CF₃, OCOR, SR, NR₂ or PR₂ group wherein R is a linear or branched, cyclic or acyclic, C₁₋₂₀ alkyl, C₂₋₂₀ alkenyl, C₂₋₂₀ alkynyl, C₆₋₂₀ aryl, C₇₋₂₀ alkylaryl or C₇₋₂₀ arylalkyl radical; optionally containing heteroatoms belonging to groups 14-16. R is preferably a C₁₋₆ alkyl, phenyl or benzyl group.

Most preferably each X is independently a hydrogen atom, a halogen atom, C₁₋₆ alkoxy group or an R group, e.g. preferably a C₁₋₆ alkyl, phenyl or benzyl group. Most preferably X is chlorine or a methyl radical. Preferably both X groups are the same.

L is preferably an alkylene linker or a bridge comprising a heteroatom, such as silicon or germanium, e.g. -SiR⁸₂-, wherein each R⁸ is independently C₁₋₂₀ alkyl, C₃₋₁₀ cycloakyl, C₆₋₂₀ aryl or tri(C₁₋₂₀ alkyl)silyl, such as trimethylsilyl. More preferably R⁸ is C₁₋₆ alkyl, especially methyl or C₃₋₇ cycloalkyl, such as cyclohexyl. Most preferably, L is a dimethylsilyl or a methylcyclohexylsilyl bridge (i.e. Me-Si-cyclohexyl). It may also be an ethylene bridge.

R² and R^{2'} can be different but they are preferably the same. R² and R^{2'} are preferably a C₁₋₁₀ hydrocarbyl group such as C₁₋₆ hydrocarbyl group. More preferably it is a linear or branched C₁₋₁₀ alkyl group. More preferably it is a linear or branched C₁₋₆ alkyl group, especially linear C₁₋₆ alkyl group such as methyl or ethyl.

The R² and R^{2'} groups can be interrupted by one or more heteroatoms, such as 1 or 2 heteroatoms, e.g. one heteroatom, selected from groups 14 to 16 of the periodic table. Such a heteroatom is preferably O, N or S, especially O. More preferably however the R² and R^{2'} groups are free from heteroatoms. Most especially R² and R^{2'} are methyl, especially both methyl.

The two Ar groups Ar and Ar' can be the same or different. It is preferred however if the Ar groups are different. The Ar' group may be unsubstituted. The Ar' is preferably a phenyl based group optionally substituted by groups R¹, especially an unsubstituted phenyl group.

The Ar group is preferably a C₆₋₂₀ aryl group such as a phenyl group or naphthyl group. Whilst the Ar group can be a heteroaryl group, such as carbazolyl, it is preferable that Ar is not a heteroaryl group. The Ar group can be unsubstituted or substituted by one or more groups R¹, more preferably by one or two R¹ groups, especially in position 4 of the aryl ring bound to the indenyl ligand or in the 3, 5-positions.

In one embodiment both Ar and Ar' are unsubstituted. In another embodiment Ar' is unsubstituted and Ar is substituted by one or two groups R¹.

R¹ is preferably a C₁₋₂₀ hydrocarbyl group, such as a C₁₋₂₀ alkyl group. R¹ groups can be the same or different, preferably the same. More preferably, R¹ is a C₂₋₁₀ alkyl group such as C₃₋₈ alkyl group. Highly preferred groups are tert butyl or isopropyl groups. It is preferred if the group R¹ is bulky, i.e. is branched. Branching might be alpha or beta to the ring. Branched C₃₋₈ alkyl groups are also favoured therefore.

In a further embodiment, two R¹ groups on adjacent carbon atoms taken together can form a fused 5 or 6 membered non aromatic ring with the Ar group, said ring being itself optionally substituted with one or more groups R⁴. Such a ring might form a tetrahydroindenyl group with the Ar ring or a tetrahydronaphthyl group.

If an R⁴ group is present, there is preferably only 1 such group. It is preferably a C₁₋₁₀ alkyl group.

It is preferred if there is one or two R¹ groups present on the Ar group. Where there is one R¹ group present, the group is preferably para to the indenyl ring (4-position). Where two R¹ groups are present these are preferably at the 3 and 5 positions.

R⁵ is preferably H..

R⁵ is preferably a C₁₋₂₀ hydrocarbyl group containing one or more heteroatoms from groups 14-16 and optionally substituted by one or more halo atoms or R^{5'} is a C₁₋₁₀ alkyl group, such as methyl but most preferably it is a group Z'R^{3'}.

R⁶ and R^{6'} may be the same or different. In one preferred embodiment one of R⁶ and R^{6'} is hydrogen, especially R⁶. It is preferred if R⁶ and R^{6'} are not both hydrogen. If not hydrogen, it is preferred if each R⁶ and R^{6'} is preferably a C₁₋₂₀ hydrocarbyl group, such as a C₁₋₂₀ alkyl group or C₆₋₁₀ aryl group. More preferably, R⁶ and R^{6'} are a C₂₋₁₀ alkyl group such as C₃₋₈ alkyl group. Highly preferred groups are tert-butyl groups. It is preferred if R⁶ and R^{6'} are bulky, i.e. are branched. Branching might be alpha or beta to the ring. Branched C₃₋₈ alkyl groups are also favoured therefore.

In a further embodiment, R⁵ and R⁶ taken together form a 5 membered carbon ring with the atoms to which they are attached.

In a further embodiment, R^{5'} and R^{6'} taken together form a 5 membered carbon ring with the atoms to which they are attached.

The R⁷ and R^{7'} groups can be the same or different. Each R⁷ and R^{7'} group is preferably hydrogen, a C₁₋₆ alkyl group or is a group ZR³. It is preferred if R^{7'} is hydrogen. It is preferred if R⁷ is hydrogen, C₁₋₆ alkyl or ZR³. The combination of both R⁷ and R^{7'} being hydrogen is most preferred. It is also preferred if ZR³ represents OC₁₋₆ alkyl, such as methoxy. It is also preferred is R⁷ represents C₁₋₆ alkyl such as methyl.

Z and Z' are O or S, preferably O.

R³ is preferably a C₁₋₁₀ hydrocarbyl group, especially a C₁₋₁₀ alkyl group, or aryl group optionally substituted by one or more halo groups. Most especially R³ is a C₁₋₆ alkyl group, such as a linear C₁₋₆ alkyl group, e.g. methyl or ethyl

R^{3'} is preferably a C₁₋₁₀ hydrocarbyl group, especially a C₁₋₁₀ alkyl group, or aryl group optionally substituted by one or more halo groups. Most especially R^{3'} is a C₁₋₆ alkyl group, such as a linear C₁₋₆ alkyl group, e.g. methyl or ethyl or it is a phenyl based radical optionally substituted with one or more halo groups such as Ph or C₆F₅.

Thus, preferred complexes of use in the invention are of formula (IV') or (IV) 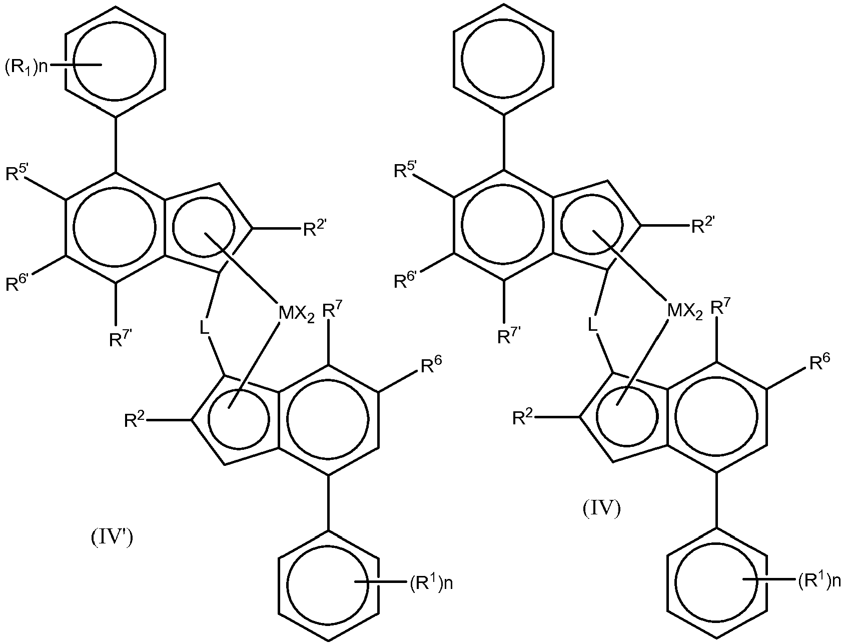 wherein
M is zirconium or hafnium;
each X is a sigma ligand, preferably each X is independently a hydrogen atom, a halogen atom, C₁₋₆ alkoxy group, C₁₋₆ alkyl, phenyl or benzyl group;
L is a divalent bridge selected from -R'₂C-, -R'₂C-CR'₂-, -R'₂Si-, -R'₂Si-SiR'₂-, -R'₂Ge-, wherein each R' is independently a hydrogen atom, C₁₋₂₀ alkyl, C₃₋₁₀ cycloalkyl, tri(C₁₋₂₀-alkyl)silyl, C₆₋₂₀-aryl, C₇₋₂₀ arylalkyl or C₇₋₂₀ alkylaryl;
each R² or R^{2'} is a C₁₋₁₀ alkyl group;
R^{5'} is a C₁₋₁₀ alkyl group or Z'R^{3'} group;
R⁶ is hydrogen or a C₁₋₁₀ alkyl group;
R^{6'} is a C₁₋₁₀ alkyl group or C₆₋₁₀ aryl group;
R⁷ is hydrogen, a C₁₋₆ alkyl group or ZR³ group;
R^{7'} is hydrogen or a C₁₋₁₀ alkyl group;
Z and Z' are independently O or S;
R^{3'} is a C₁₋₁₀ alkyl group, or a C₆₋₁₀ aryl group optionally substituted by one or more halo groups;
R³ is a C₁₋₁₀-alkyl group;
each n is independently 0 to 4, e.g. 0, 1 or 2;
and each R¹ is independently a C₁₋₂₀ hydrocarbyl group, e.g. C₁₋₁₀ alkyl group.

Viewed from another aspect the invention uses a complex of formula (V') or (V): 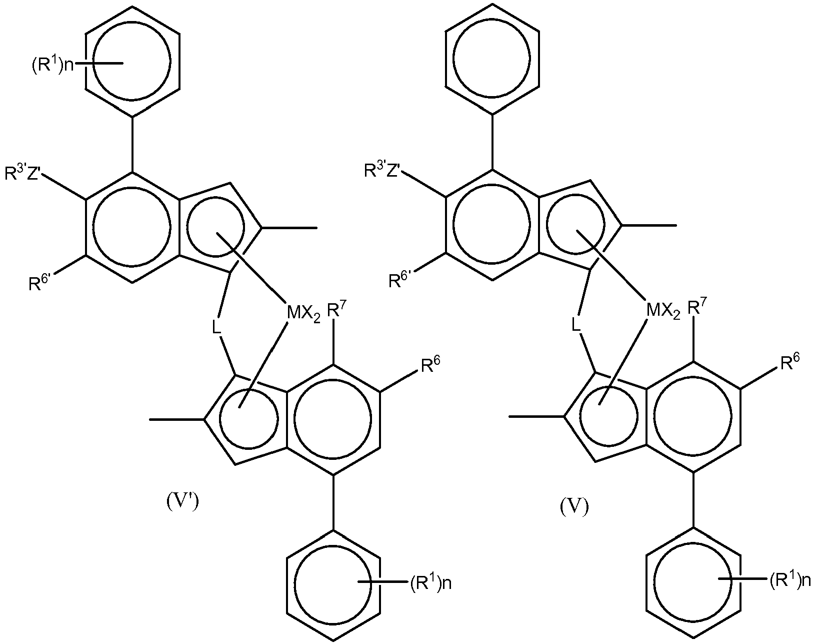
M is zirconium or hafnium;
each X is a sigma ligand, preferably each X is independently a hydrogen atom, a halogen atom, C₁₋₆ alkoxy group, C₁₋₆ alkyl, phenyl or benzyl group;
L is a divalent bridge selected from -R'₂C- or -R'₂Si- wherein each R' is independently a hydrogen atom, C₁₋₂₀ alkyl or C₃₋₁₀ cycloalkyl;
R⁶ is hydrogen or a C₁₋₁₀ alkyl group;
R^{6'} is a C₁₋₁₀ alkyl group or C₆₋₁₀ aryl group;
R⁷ is hydrogen, C₁₋₆ alkyl or OC₁₋₆ alkyl;
Z' is O or S;
R^{3'} is a C₁₋₁₀ alkyl group, or C₆₋₁₀ aryl group optionally substituted by one or more halo groups;
n is independently 0 to 4, e.g. 0, 1 or 2; and
each R¹ is independently a C₁₋₁₀ alkyl group.

Viewed from a further preferred aspect the invention uses a complex of formula (VI') or (VI): 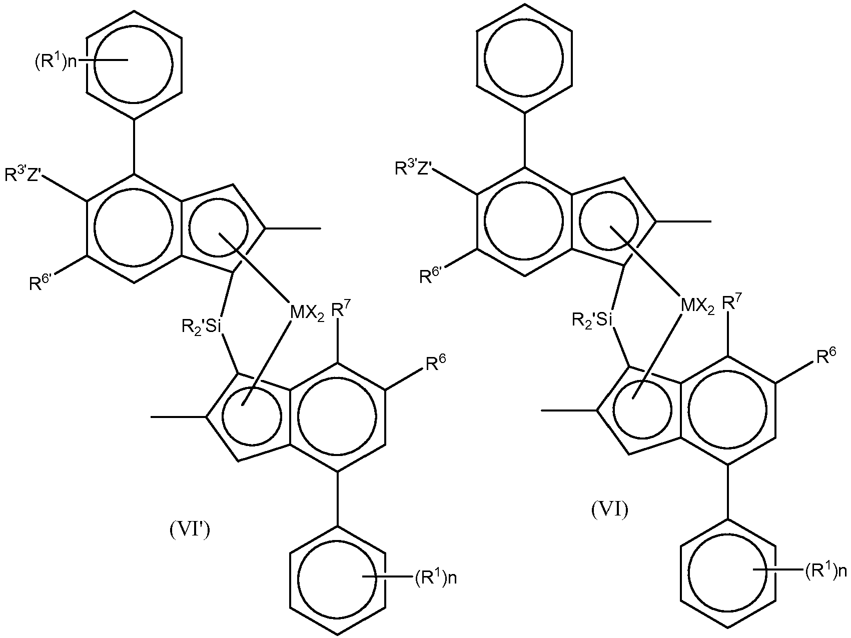
M is zirconium or hafnium;
each X is a sigma ligand, preferably each X is independently a hydrogen atom, a halogen atom, C₁₋₆-alkoxy group, C₁₋₆-alkyl, phenyl or benzyl group;
each R' is independently a hydrogen atom, C₁₋₂₀ alkyl or C₃₋₇ cycloalkyl;
R⁶ is hydrogen or a C₁₋₁₀ alkyl group;
R^{6'} is a C₁₋₁₀ alkyl group or C₆₋₁₀ aryl group;
R⁷ is hydrogen, C₁₋₆ alkyl or OC₁₋₆ alkyl;
Z' is O or S;
R^{3'} is a C₁₋₁₀ alkyl group, or C₆₋₁₀ aryl group optionally substituted by one or more halo groups;
n is independently 0, 1 to 2; and
each R¹ is independently a C₃₋₈ alkyl group.

Most especially, the complex of use in the invention is of formula (VII') or (VII): 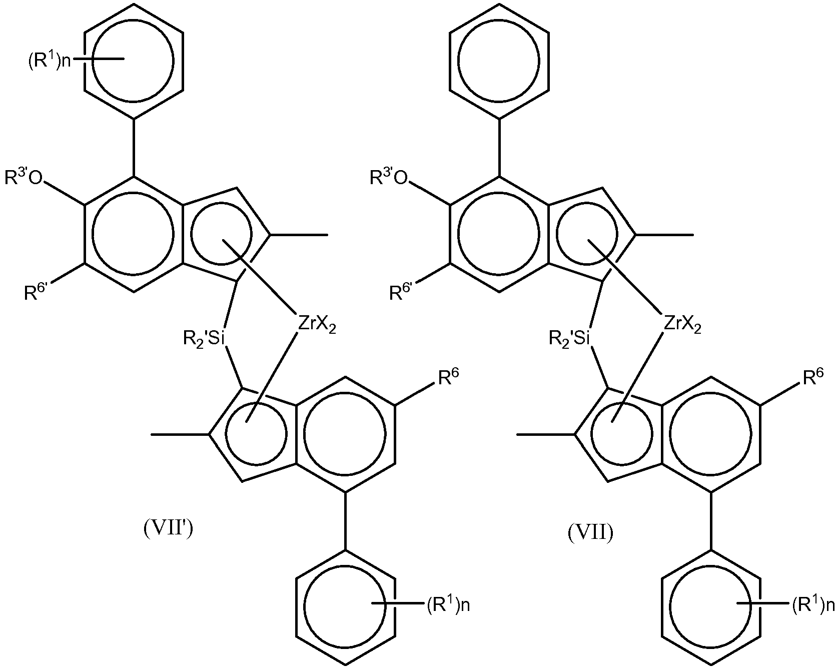
wherein each X is a sigma ligand, preferably each X is independently a hydrogen atom, a halogen atom, C₁₋₆-alkoxy group, C₁₋₆-alkyl, phenyl or benzyl group;
R' is independently a C₁₋₆ alkyl or C₃₋₁₀ cycloalkyl;
R¹ is independently C₃₋₈ alkyl;
R⁶ is hydrogen or a C₃₋₈ alkyl group;
R^{6'} is a C₃₋₈ alkyl group or C₆₋₁₀ aryl group;
R^{3'} is a C₁₋₆ alkyl group, or C₆₋₁₀ aryl group optionally substituted by one or more halo groups; and
n is independently 0, 1 or 2.

Particular compounds of the invention include:
*rac*-dimethylsilanediylbis[2-methyl-4-(4-tert-butylphenyl)-1,5,6,7-tetrahydro-s-indacen-1-yl] zirconium dichloride;
*rac*-dimethylsilanediylbis(2-methyl-4-phenyl-5-methoxy-6-*tert*-butylinden-1-yl) zirconium dichloride;
rac-anti-Me₂Si(2-Me-4-Ph-6-*t*Bu-Ind)(2-Me-4-Ph-5-OMe-6-*t*Bu-Ind)ZrCl₂;
rac-anti-Me₂Si(2-Me-4-(p-*t*BuPh)-Ind)(2-Me-4-Ph-5-OMe-6-*t*Bu-Ind)ZrCl₂:
rac-anti-Me₂Si(2-Me-4-(3,5-di-*t*BuPh)-6-*t*Bu-Ind)(2-Me-4-Ph-5-OMe-6-*t*Bu-Ind)ZrCl_{2;}
rac-anti-Me₂Si(2-Me-4-(p-*t*BuPh)-Ind)(2-Me-4-Ph-5-OC₆F₅)-6-*i*Pr-Ind)ZrCl_{2;}
rac-anti-Me(CyHex)Si(2-Me-4-Ph-6-*t*Bu-Ind)(2-Me-4-Ph-5-OMe-6-*t*Bu-Ind)ZrCl_{2;}
rac-anti-Me₂Si(2-Me-4-(3,5-di-*t*BuPh)-7-Me-Ind)(2-Me-4-Ph-5-OMe-6-*t*Bu-Ind)ZrCl_{2;}
rac-anti-Me₂Si(2-Me-4-(3,5-di-*t*BuPh)-7-OMe-Ind)(2-Me-4-Ph-5-OMe-6-*t*Bu-Ind)ZrCl_{2;}
rac-anti-Me₂Si(2-Me-4-(p-*t*BuPh)-6-*t*Bu-Ind)(2-Me-4-Ph-5-OMe-6-*t*Bu-Ind)ZrCl_{2;}
rac-anti-Me₂Si(2-Me-4-(p-*t*BuPh)-Ind)(2-Me-4-(4-*t*BuPh)-5-OMe-6-*t*Bu-Ind)ZrCl_{2;}
rac-anti-Me₂Si(2-Me-4-(p-*t*BuPh)-Ind)(2-Me-4-(3,5-*t*Bu2Ph)-5-OMe-6-*t*Bu-Ind)ZrCl_{2;}
rac-anti-Me₂Si(2-Me-4-(p-*t*BuPh)-Ind)(2-Me-4-Ph-5-OiBu-6-*t*Bu-Ind)ZrCl.

For the avoidance of doubt, any narrower definition of a substituent offered above can be combined with any other broad or narrowed definition of any other substituent.

Throughout the disclosure above, where a narrower definition of a substituent is presented, that narrower definition is deemed disclosed in conjunction with all broader and narrower definitions of other substituents in the application.

These catalysts can be made following the principles in WO2013/007650.

### Synthesis

The ligands required to form the catalysts of the invention can be synthesised by any process and the skilled organic chemist would be able to devise various synthetic protocols for the manufacture of the necessary ligand materials. WO2007/116034 discloses the necessary chemistry. Synthetic protocols can also generally be found in WO200202576, WO2011/135004, WO2012/084961, WO2012/001052 WO2011/076780 and especially in WO2013/007650.

### Cocatalyst

To form an active catalytic species it is normally necessary to employ a cocatalyst as is well known in the art. The present invention requires the use of both an aluminoxane cocatalyst and a boron containing cocatalyst.

The aluminoxane cocatalyst can be one of formula: 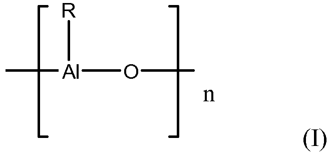 where n is usually from 6 to 20 and R has the meaning below.

Aluminoxanes are formed on partial hydrolysis of organoaluminum compounds, for example those of the formula AlR₃, AlR₂Y and Al₂R₃Y₃ where R can be, for example, C1-C10 alkyl, preferably C1-C5 alkyl, or C3-10-cycloalkyl, C7-C12 -aralkyl or alkaryl and/or phenyl or naphthyl, and where Y can be hydrogen, FI1307
halogen, preferably chlorine or bromine, or C1-C10 alkoxy, preferably methoxy or ethoxy. The resulting oxygen-containing aluminoxanes are not in general pure compounds but mixtures of oligomers of the formula (I).

The preferred aluminoxane in the process according to the invention is methylaluminoxane (MAO). Since the aluminoxanes used according to the invention as cocatalysts are not, owing to their mode of preparation, pure compounds, the molarity of aluminoxane solutions hereinafter is based on their aluminium content.

It has been surprisingly found however, that in the context of heterogeneous catalysis, where catalysts are not supported on any external carrier or supported as described above, that higher activities can be achieved if a boron based cocatalyst is also employed as a cocatalyst. It is known in the art that where boron based cocatalysts are employed, and if the complex is not already alkylated at the metal, the complex needs to be alkylated by reaction with an aluminium alkyl compound. This procedure is well known and any suitable aluminium alkyl, e.g. Al(C₁₋₆-alkyl)₃ can be used.

The present invention combines the use of boron based cocatalysts with aluminoxanes rather than the combination of these simple aluminium alkyls and boron cocatalysts.

Boron based cocatalysts of interest include boron compounds containing a borate 3⁺ ion, i.e. borate compounds. These compounds generally contain an anion of formula:

(Z)₄B⁻ (V)

where Z is an optionally substituted phenyl derivative, said substituent being a C₁₋₆ alkyl group, haloC₁₋₆-alkyl or halo group. Preferred options are methyl, fluoro or trifluoromethyl. Most preferably, the phenyl group is perfluorinated or unsubstituted.

Such ionic cocatalysts preferably contain a non-coordinating anion such as tetrakis(pentafluorophenyl)borate and tetraphenylborate.

Suitable counterions are protonated amine or aniline derivatives or phosphonium ions. These may have the general formula (VI) or (VII):

NQ₄⁺ (VI) or PQ₄⁺ (VII)

where Q is independently H, C₁₋₆-alkyl, C₃₋₈ cycloalkyl, phenylC₁₋₆-alkylene- or optionally substituted Ph. Optional substituents may be C1-6-alkyl, halo or nitro. There may be one or more than one such substituent. Preferred substituted Ph groups include therefore para-substituted phenyl, preferably p-Br-phenyl or p-nitrophenyl, tolyl or dimethylphenyl.

It is preferred if at least one Q group is H, thus preferred compounds are those of formula:

NHQ₃⁺ (VI') or PHQ₃⁺ (VII')

Preferred phenylC₁₋₆-alkyl- groups include benzyl.

Suitable counterions therefore include: methyl ammonium, anilinium, dimethylammonium, diethylammonium, N-methylanilinium, diphenylammonium, N,N-dimethylanilinium, trimethylammonium, triethylammonium, tri-n-butylammonium, methyldiphenylammonium, p-bromo-N,N- dimethylanilinium or p-nitro-N,N-dimethylanilinium, especially dimethylammonium or N,N-dimethylanilinium. The use of pyridinium as an ion is a further option.

Phosphonium ions of interest include triphenylphosphonium, triethylphosphonium, diphenylphosphonium, tri(methylphenyl)phosphonium and tri(dimethylphenyl)phosphonium

A more preferred counterion is trityl (CPh₃⁺) or analogues thereof in which the Ph group is functionalised to carry one or more alkyl groups. Highly preferred borates of use in the invention therefore comprise the tetrakis(pentafluorophenyl)borate ion.

Preferred ionic compounds which can be used according to the present invention includetributylammoniumtetra(pentafluorophenyl)borate, tributylammoniumtetra(trifluoromethylphenyl)borate, tributylammoniumtetra(4-fluorophenyl)borate, N,N-dimethylcyclohexylammoniumtetrakis(pentafluorophenyl)borate, N,N-dimethylbenzylammoniumtetrakis(pentafluorophenyl)borate, N,N-dimethylaniliniumtetrakis(pentafluorophenyl)borate, N,N- di(propyl)ammoniumtetrakis(pentafluorophenyl)borate, di(cyclohexyl)ammoniumtetrakis(pentafluorophenyl)borate, triphenylcarbeniumtetrakis(pentafluorophenyl)borate, ferroceniumtetrakis(pentafluorophenyl)borate.

Preference is given to triphenylcarbeniumtetrakis(pentafluorophenyl) borate, N,N- dimethylcyclohexylammoniumtetrakis(pentafluorophenyl)borate or N,N-dimethylbenzylammoniumtetrakis(pentafluorophenyl)borate, or (N,N-dimethylaniliniumtetrakis(pentafluorophenyl)borate).

It has been surprisingly found that certain boron based cocatalysts are especially preferred. Preferred borates of use in the invention therefore comprise the trityl ion. Thus the use of N,N-dimethylammonium-tetrakispentafluorophenylborate and Ph₃CB(PhF₅)₄ and analogues therefore are especially favoured.

Suitable amounts of cocatalyst will be well known to the skilled man.

The ratio of boron to the transition metal ion of the metallocene in the catalyst may be in the range 1:10 to 10:1 mol/mol, preferably 1:5 to 5:1, especially 1:5 to 2:1, such as 1:4 to 2:1 mol/mol.

The ratio of Al in the aluminoxane to the metal ion of the metallocene may be in the range 1:1 to 1200:1 mol/mol, preferably 10:1 to 500:1, especially 100:1 to 300:1 mol/mol

### Catalyst Manufacture

The metallocene complex of the present invention is used in combination with the cocatalysts as a catalyst for the polymerization of olefins. The catalyst of the invention is in solid, preferably in unsupported form. Thus, no external carrier is used but the catalyst is still presented in solid particulate form. Thus, no external support material such as inert organic or inorganic carrier, such as for example silica is employed.

In order to provide the catalyst of the invention in solid form but without using an external carrier, it is preferred if a liquid/liquid emulsion system is used. The process involves forming dispersing catalyst components (i) (the complex) and (ii) +(iii) the cocatalysts) in a solvent, and solidifying said dispersed droplets to form solid particles.

In the present case, it is particularly preferred if the aluminoxane is contacted with the metallocene before the borate is added. Both cocatalyst components and the metallocene are preferably present in one solution.

In particular, the method involves preparing a solution of the catalyst components; dispersing said solution in an solvent to form an emulsion in which said one or more catalyst components are present in the droplets of the dispersed phase; immobilising the catalyst components in the dispersed droplets, in the absence of an external particulate porous support, to form solid particles comprising the said catalyst, and optionally recovering said particles.

This process enables the manufacture of active catalyst particles with improved morphology, e.g. with a predetermined particle size, spherical shape, compact structure, excellent surface properties and without using any added external porous support material, such as an inorganic oxide, e.g. silica. The catalyst particles can have a smooth surface, they may be compact in nature and catalyst active components can be distributed uniformly thorough the catalyst particles.

The catalyst forming compounds may be combined in one solution which is dispersed to the immiscible solvent, or, alternatively, at least two separate catalyst solutions for each part of the catalyst forming compounds may be prepared, which are then dispersed successively to the solvent.

In a preferred method for forming the catalyst at least two separate solutions for each or part of said catalyst may be prepared, which are then dispersed successively to the immiscible solvent.

More preferably, a solution of the complex comprising the transition metal compound and the cocatalysts is combined with the solvent to form an emulsion wherein that inert solvent forms the continuous liquid phase and the solution comprising the catalyst components forms the dispersed phase (discontinuous phase) in the form of dispersed droplets. The droplets are then solidified to form solid catalyst particles, and the solid particles are separated from the liquid and optionally washed and/or dried. The solvent forming the continuous phase may be immiscible to the catalyst solution at least at the conditions (e. g. temperatures) used during the dispersing step.

The term "immiscible with the catalyst solution" means that the solvent (continuous phase) is fully immiscible or partly immiscible i.e. not fully miscible with the dispersed phase solution.

Preferably said solvent is inert in relation to the compounds of the catalyst system to be produced. Full disclosure of the necessary process can be found in WO03/05193.

The inert solvent must be chemically inert at least at the conditions (e.g. temperature) used during the dispersing step. Preferably, the solvent of said continuous phase does not contain dissolved therein any significant amounts of catalyst forming compounds. Thus, the solid particles of the catalyst are formed in the droplets from the compounds which originate from the dispersed phase (i.e. are provided to the emulsion in a solution dispersed into the continuous phase).

The terms "immobilisation" and "solidification" are used herein interchangeably for the same purpose, i.e. for forming free flowing solid catalyst particles in the absence of an external porous particulate carrier, such as silica. The solidification happens thus within the droplets. Said step can be effected in various ways as disclosed in said WO03/051934 Preferably solidification is caused by an external stimulus to the emulsion system such as a temperature change to cause the solidification. Thus in said step the catalyst component (s) remain "fixed" within the formed solid particles. It is also possible that one or more of the catalyst components may take part in the solidification/immobilisation reaction.

Accordingly, solid, compositionally uniform particles having a predetermined particle size range can be obtained.

Furthermore, the particle size of the catalyst particles of the invention can be controlled by the size of the droplets in the solution, and spherical particles with a uniform particle size distribution can be obtained.

The invention is also industrially advantageous, since it enables the preparation of the solid particles to be carried out as a one-pot procedure. Continuous or semicontinuous processes are also possible for producing the catalyst.

### Dispersed Phase

The principles for preparing two phase emulsion systems are known in the chemical field. Thus, in order to form the two phase liquid system, the solution of the catalyst component (s) and the solvent used as the continuous liquid phase have to be essentially immiscible at least during the dispersing step. This can be achieved in a known manner e.g. by choosing said two liquids and/or the temperature of the dispersing step/solidifying step accordingly.

A solvent may be employed to form the solution of the catalyst component (s). Said solvent is chosen so that it dissolves said catalyst component (s). The solvent can be preferably an organic solvent such as used in the field, comprising an optionally substituted hydrocarbon such as linear or branched aliphatic, alicyclic or aromatic hydrocarbon, such as a linear or cyclic alkane, an aromatic hydrocarbon and/or a halogen containing hydrocarbon.

Examples of aromatic hydrocarbons are toluene, benzene, ethylbenzene, propylbenzene, butylbenzene and xylene. Toluene is a preferred solvent. The solution may comprise one or more solvents. Such a solvent can thus be used to facilitate the emulsion formation, and usually does not form part of the solidified particles, but e.g. is removed after the solidification step together with the continuous phase.

Alternatively, a solvent may take part in the solidification, e.g. an inert hydrocarbon having a high melting point (waxes), such as above 40°C, suitably above 70°C, e. g. above 80°C or 90°C, may be used as solvents of the dispersed phase to immobilise the catalyst compounds within the formed droplets.

In another embodiment, the solvent consists partly or completely of a liquid monomer, e.g. liquid olefin monomer designed to be polymerised in a "prepolymerisation" immobilisation step.

### Continuous Phase

The solvent used to form the continuous liquid phase is a single solvent or a mixture of different solvents and may be immiscible with the solution of the catalyst components at least at the conditions (e.g. temperatures) used during the dispersing step. Preferably said solvent is inert in relation to said compounds.

The term "inert in relation to said compounds" means herein that the solvent of the continuous phase is chemically inert, i.e. undergoes no chemical reaction with any catalyst forming component. Thus, the solid particles of the catalyst are formed in the droplets from the compounds which originate from the dispersed phase, i.e. are provided to the emulsion in a solution dispersed into the continuous phase.

It is preferred that the catalyst components used for forming the solid catalyst will not be soluble in the solvent of the continuous liquid phase. Preferably, said catalyst components are essentially insoluble in said continuous phase forming solvent.

Solidification takes place essentially after the droplets are formed, i.e. the solidification is effected within the droplets e.g. by causing a solidifying reaction among the compounds present in the droplets. Furthermore, even if some solidifying agent is added to the system separately, it reacts within the droplet phase and no catalyst forming components go into the continuous phase.

The term "emulsion" used herein covers both bi-and multiphasic systems.

In a preferred embodiment said solvent forming the continuous phase is an inert solvent including a halogenated organic solvent or mixtures thereof, preferably fluorinated organic solvents and particularly semi, highly or perfluorinated organic solvents and functionalised derivatives thereof. Examples of the above-mentioned solvents are semi, highly or perfluorinated hydrocarbons, such as alkanes, alkenes and cycloalkanes, ethers, e.g. perfluorinated ethers and amines, particularly tertiary amines, and functionalised derivatives thereof. Preferred are semi, highly or perfluorinated, particularly perfluorinated hydrocarbons, e.g. perfluorohydrocarbons of e.g. C3-C30, such as C4-C10. Specific examples of suitable perfluoroalkanes and perfluorocycloalkanes include perfluoro-hexane, -heptane, -octane and - (methylcyclohexane). Semi fluorinated hydrocarbons relates particularly to semifluorinated n-alkanes, such as perfluoroalkyl-alkane.

"Semi fluorinated" hydrocarbons also include such hydrocarbons wherein blocks of -C-F and -C-H alternate. "Highly fluorinated" means that the majority of the -C-H units are replaced with -C-F units. "Perfluorinated" means that all -C-H units are replaced with -C-F units. See the articles of A. Enders and G. Maas in "Chemie in unserer Zeit", 34. Jahrg. 2000, Nr.6, and of Pierandrea Lo Nostro in "Advances in Colloid and Interface Science", 56 (1995) 245-287, Elsevier Science.

### Dispersing step

The emulsion can be formed by any means known in the art: by mixing, such as by stirring said solution vigorously to said solvent forming the continuous phase or by means of mixing mills, or by means of ultra sonic wave, or by using a so called phase change method for preparing the emulsion by first forming a homogeneous system which is then transferred by changing the temperature of the system to a biphasic system so that droplets will be formed.

The two phase state is maintained during the emulsion formation step and the solidification step, as, for example, by appropriate stirring.

Additionally, emulsifying agents/emulsion stabilisers can be used, preferably in a manner known in the art, for facilitating the formation and/or stability of the emulsion. For the said purposes e.g. surfactants, e.g. a class based on hydrocarbons (including polymeric hydrocarbons with a molecular weight e.g. up to 10 000 and optionally interrupted with a heteroatom(s)), preferably halogenated hydrocarbons, such as semi- or highly fluorinated hydrocarbons optionally having a functional group selected e.g. from -OH, -SH, NH₂, NR"₂. -COOH, -COONH₂, oxides of alkenes, -CR"=CH₂, where R" is hydrogen, or C1-C20 alkyl, C2-20-alkenyl or C2-20-alkynyl group, oxo-groups, cyclic ethers and/or any reactive derivative of these groups, like alkoxy, or carboxylic acid alkyl ester groups, or, preferably semi-, highly- or perfluorinated hydrocarbons having a functionalised terminal, can be used. The surfactants can be added to the catalyst solution, which forms the dispersed phase of the emulsion, to facilitate the forming of the emulsion and to stabilize the emulsion.

Alternatively, an emulsifying and/or emulsion stabilising aid can also be formed by reacting a surfactant precursor bearing at least one functional group with a compound reactive with said functional group and present in the catalyst solution or in the solvent forming the continuous phase. The obtained reaction product acts as the actual emulsifying aid and or stabiliser in the formed emulsion system.

Examples of the surfactant precursors usable for forming said reaction product include e.g. known surfactants which bear at least one functional group selected e.g. from -OH, -SH, NH₂, NR"₂. -COOH, -COONH₂, oxides of alkenes,-CR"=CH₂, where R" is hydrogen, or C1-C20 alkyl, C2-20-alkenyl or C2-20-alkynyl group, oxo-groups, cyclic ethers with 3 to 5 ring atoms, and/or any reactive derivative of these groups, like alkoxy or carboxylic acid alkyl ester groups; e.g. semi-, highly or perfluorinated hydrocarbons bearing one or more of said functional groups. Preferably, the surfactant precursor has a terminal functionality as defined above.

The compound reacting with such surfactant precursor is preferably contained in the catalyst solution and may be a further additive or one or more of the catalyst forming compounds. Such compound is e.g. a compound of group 13 (e.g. MAO and/or an aluminium alkyl compound and/or a transition metal compound).

If a surfactant precursor is used, it is preferably first reacted with a compound of the catalyst solution before the addition of the transition metal compound. In one embodiment e.g. a highly fluorinated C1-n (suitably C4-30-or C5-15) alcohol (e.g. highly fluorinated heptanol, octanol or nonanol), oxide (e.g. propenoxide) or acrylate ester is reacted with a cocatalyst to form the "actual" surfactant. Then, an additional amount of cocatalyst and the transition metal compound is added to said solution and the obtained solution is dispersed to the solvent forming the continuous phase. The "actual" surfactant solution may be prepared before the dispersing step or in the dispersed system. If said solution is made before the dispersing step, then the prepared "actual" surfactant solution and the transition metal solution may be dispersed successively (e. g. the surfactant solution first) to the immiscible solvent, or be combined together before the dispersing step.

### Solidification

The solidification of the catalyst component(s) in the dispersed droplets can be effected in various ways, e.g. by causing or accelerating the formation of said solid catalyst forming reaction products of the compounds present in the droplets. This can be effected, depending on the used compounds and/or the desired solidification rate, with or without an external stimulus, such as a temperature change of the system.

In a particularly preferred embodiment, the solidification is effected after the emulsion system is formed by subjecting the system to an external stimulus, such as a temperature change. Temperature differences of e.g. 5 to 100°C, such as 10 to 100°C, or 20 to 90°C, such as 50 to 90°C are preferred.

The emulsion system may be subjected to a rapid temperature change to cause a fast solidification in the dispersed system. The dispersed phase may e. g. be subjected to an immediate (within milliseconds to few seconds) temperature change in order to achieve an instant solidification of the component (s) within the droplets. The appropriate temperature change, i. e. an increase or a decrease in the temperature of an emulsion system, required for the desired solidification rate of the components cannot be limited to any specific range, but naturally depends on the emulsion system, i.a. on the used compounds and the concentrations/ratios thereof, as well as on the used solvents, and is chosen accordingly. It is also evident that any techniques may be used to provide sufficient heating or cooling effect to the dispersed system to cause the desired solidification.

In one embodiment the heating or cooling effect is obtained by bringing the emulsion system with a certain temperature to an inert receiving medium with significantly different temperature, e. g. as stated above, whereby said temperature change of the emulsion system is sufficient to cause the rapid solidification of the droplets. The receiving medium can be gaseous, e. g. air, or a liquid, preferably a solvent, or a mixture of two or more solvents, wherein the catalyst component (s) is (are) immiscible and which is inert in relation to the catalyst component (s). For instance, the receiving medium comprises the same immiscible solvent used as the continuous phase in the first emulsion formation step.

Said solvents can be used alone or as a mixture with other solvents, such as aliphatic or aromatic hydrocarbons, such as alkanes. Preferably a fluorinated solvent as the receiving medium is used, which may be the same as the continuous phase in the emulsion formation, e. g. perfluorinated hydrocarbon.

Alternatively, the temperature difference may be effected by gradual heating of the emulsion system, e. g. up to 10°C per minute, preferably 0.5 to 6°C per minute and more preferably in 1 to 5°C per minute.

In case a melt of e. g. a hydrocarbon solvent is used for forming the dispersed phase, the solidifcation of the droplets may be effected by cooling the system using the temperature difference stated above.

Preferably, the "one phase" change as usable for forming an emulsion can also be utilised for solidifying the catalytically active contents within the droplets of an emulsion system by, again, effecting a temperature change in the dispersed system, whereby the solvent used in the droplets becomes miscible with the continuous phase, preferably a fluorous continuous phase as defined above, so that the droplets become impoverished of the solvent and the solidifying components remaining in the "droplets" start to solidify. Thus the immisciblity can be adjusted with respect to the solvents and conditions (temperature) to control the solidification step.

The miscibility of e.g. organic solvents with fluorous solvents can be found from the literature and be chosen accordingly by a skilled person. Also the critical temperatures needed for the phase change are available from the literature or can be determined using methods known in the art, e. g. the Hildebrand-Scatchard-Theorie. Reference is also made to the articles of A. Enders and G. and of Pierandrea Lo Nostro cited above.

Thus according to the invention, the entire or only part of the droplet may be converted to a solid form. The size of the "solidified"droplet may be smaller or greater than that of the original droplet, e. g. if the amount of the monomer used for the prepolymerisation is relatively large.

The solid catalyst particles recovered can be used, after an optional washing step, in a polymerisation process of an olefin. Alternatively, the separated and optionally washed solid particles can be dried to remove any solvent present in the particles before use in the polymerisation step. The separation and optional washing steps can be effected in a known manner, e. g. by filtration and subsequent washing of the solids with a suitable solvent.

The droplet shape of the particles may be substantially maintained. The formed particles may have an average size range of 1 to 500 µm, e.g. 5 to 500 µm, advantageously 5 to 200 µm or 10 to 150 µm. Even an average size range of 5 to 60 µm is possible. The size may be chosen depending on the polymerisation the catalyst is used for. Advantageously, the particles are essentially spherical in shape, they have a low porosity and a low surface area.

The formation of solution can be effected at a temperature of 0-100°C, e.g. at 20-80°C. The dispersion step maybe effected at -20 °C-100°C, e.g. at -10-70°C, such as at -5 to 30°C, e.g. around 0 °C.

To the obtained dispersion an emulsifying agent as defined above, may be added to improve/stabilise the droplet formation. The solidification of the catalyst component in the droplets is preferably effected by raising the temperature of the mixture, e.g. from 0 °C temperature up to 100°C, e.g. up to 60-90°C, gradually. E.g. in 1 to 180 minutes, e.g. 1-90 or 5-30 minutes, or as a rapid heat change. Heating time is dependent on the size of the reactor.

During the solidification step, which is preferably carried out at 60 to 100 °C, preferably at 75 to 95 °C, (below the boiling point of the solvents) the solvents may preferably be removed and optionally the solids are washed with a wash solution, which can be any solvent or mixture of solvents such as those defined above and/or used in the art, preferably a hydrocarbon, such as pentane, hexane or heptane, suitably heptane. The washed catalyst can be dried or it can be slurried into an oil and used as a catalyst-oil slurry in polymerisation process.

All or part of the preparation steps can be done in a continuous manner. Reference is made to WO2006/069733 describing principles of such a continuous or semicontinuous preparation methods of the solid catalyst types, prepared via emulsion/solidification method.

The formed catalyst preferably has good stability/kinetics in terms of longevity of reaction, high activity and the catalysts enable low ash contents.

Activities in gas phase of more than 12 kg polymer per g catalysts/h can be achieved, preferably at least 15 kg polymer per g catalyst /h.

Catalyst kinetics are also good. Catalysts should have at least a 30 minute period without any drop off in performance, preferably at least 1 h.

### Catalyst Prepolymerisation (Off-line prepolymerisation)

The use of the heterogeneous, non-supported catalysts, (i.e. "self-supported" catalysts) might have, as a drawback, a tendency to dissolve to some extent in the polymerisation media, i.e. some active catalyst components might leach out of the catalyst particles during slurry polymerisation, whereby the original good morphology of the catalyst might be lost. These leached catalyst components are very active possibly causing problems during polymerisation. Therefore, the amount of leached components should be minimized, i.e. all catalyst components should be kept in heterogeneous form.

Furthermore, the self-supported catalysts generate, due to the high amount of catalytically active species in the catalyst system, high temperatures at the beginning of the polymerisation which may cause melting of the product material. Both effects, i.e. the partial dissolving of the catalyst system and the heat generation, might cause fouling, sheeting and deterioration of the polymer material morphology.

In order to minimise the possible problems associated with high activity or leaching, it is preferred to "prepolymerise" the catalyst before using it in polymerisation process. It has to be noted that prepolymerisation in this regard is part of the catalyst preparation process, being a step carried out after a solid catalyst is formed. This catalyst prepolymerisation step is not part of the actual polymerisation configuration, which might comprise a conventional process prepolymerisation step as well. After the catalyst prepolymerisation step, a solid catalyst is obtained and used in polymerisation.

Catalyst "prepolymerisation" takes place following the solidification step of the liquid-liquid emulsion process hereinbefore described. Prepolymerisation may take place by known methods described in the art, such as that described in WO 2010/052263, WO 2010/052260 or WO 2010/052264. Preferable embodiments of this aspect of the invention are described herein.

As monomers in the catalyst prepolymerisation step preferably alpha-olefins are used. Preferable C₂-C₁₀ olefins, such as ethylene, propylene, 1-butene, 1-pentene, 1-hexene, 4-methyl-1-pentene, 1-heptene, 1-octene, 1-nonene 1-decene, styrene and vinylcyclohexene are used. Most preferred alpha-olefin is propylene.

The catalyst prepolymerisation may be carried out in gas phase or in an inert diluent, typically oil or fluorinated hydrocarbon, preferably in fluorinated hydrocarbons or mixture of fluorinated hydrocarbons. Preferably perfluorinated hydrocarbons are used. The melting point of such (per)fluorinated hydrocarbons is typically in the range of 0 to 140 °C, preferably 30 to 120 °C , like 50 to 110 °C .

Where the catalyst prepolymerisation is done in fluorinated hydrocarbons, the temperature for the prepolymerisation step is below 70°C, e.g. in the range of -30 to 70°C, preferably 0-65°C and more preferably in the range 20 to 55°C.

Pressure within the prepolymerisation vessel is preferably higher than atmospheric pressure to minimize the eventual leaching of air and/or moisture into the catalyst vessel. Preferably the pressure is in the range of at least 1 to 15 bar, preferably 2 to 10 bar. The prepolymerisation vessel is preferably kept in an inert atmosphere, such as under nitrogen or argon or similar atmosphere.

Prepolymeristaion is continued until the prepolymerisation degree defined as weight of polymer /weight of solid catalyst before prepolymerisation step is reached. The degree is below 25, preferably 0,5 to 10.0, more preferably 1.0 to 8.0, most preferably 2,0 to 6,0.

Use of the catalyst prepolymerisation step offers the advantage of minimising leaching of catalyst components and thus local overheating.

After prepolymerisation, the catalyst can be isolated and stored.

### Polymerisation

The present invention relates to a multistage polymerisation process using a single site catalyst, said process comprising an optional but preferred prepolymerisation step, a slurry step polymerisation, preferably a slurry bulk phase polymerisation step, and at least one gas phase polymerisation steps.

Preferably the same catalyst is used in each step and ideally, it is transferred from prepolymerisation to slurry and gas phase steps in sequence in a well known matter. One preferred process configuration is based on Borstar^{®} type cascade.

### Prepolymerisation - Stage (Ia)

The process of the invention may utilise an in-line prepolymerisation step. This step is separate from the off-line prepolymerization of the catalyst using propylene discussed above. The catalyst off-line prepolymerization step is a part of the catalyst synthesis rather than a part of the propylene polymerisation process. The in-line prepolymerisation step takes place just before the slurry polymerisation step and may be effected in the presence of hydrogen although the concentration of hydrogen should be low if it is present. The concentration of hydrogen may be 0.01 mol% or less such as 0.01 to 0.001 mol% of the contents of the reactor. It is preferred if there is no hydrogen feed to the prepolymerisation reaction at all.

The temperature conditions within the prepolymerisation step are ideally kept low such as 0 to 50°C, preferably 5 to 40°C, more preferably 10 to 30°C

The prepolymerisation stage preferably polymerises propylene only.

The residence time in the prepolymerisation reaction stage is short, typically 5 to 30 min.

The prepolymerisation stage preferably generates less than 5 wt% of the total polymer formed, such as 3 wt% or less.

Prepolymerisation preferably takes place in its own dedicated reactor, ideally in slurry. The prepolymerised catalyst is then transferred over to the slurry phase step. However, it is also possible, especially in batch processes, that prepolymerisation is carried out in the same reactor as the first main polymerisation.

### Slurry Polymerisation - Stage Ib

In the present invention, the slurry polymerisation step produces a propylene homopolymer. The slurry phase polymerisation is ideally effected in a loop reactor. Ideally, the polymerisation takes place in bulk, i.e. in a medium of liquid propylene. For slurry reactors in general and in particular for bulk reactors, the reaction temperature will generally be in the range 70 to 100°C, preferably 70 to 85°C. The reactor pressure will generally be in the range 5 to 80 bar (e.g. 20-60 bar), and the residence time will generally be in the range 0.1 to 5 hours (e.g. 0.3 to 2 hours).

It is preferred if hydrogen is used in the slurry polymerisation. The amount of hydrogen employed in the slurry phase is preferably considerably greater than the amount used in the prepolymerisation stage.

It will be appreciated that hydrogen added to the prepolymerisation step is transferred over to the slurry phase step. Thus the amount of hydrogen in the slurry phase is the sum of that added to the prepolymerisation and that added directly to the slurry step. The amount of hydrogen consumed in the prepolymerisation step is negligible.

### Gas phase polymerisation stage (s) - II

There may be one gas phase polymerisation stage or two or more gas phase steps, such as two gas phase steps. Ideally there is one gas phase step.

A gas phase step produces a propylene homopolymer as well and thus the process as a whole produces a homopolymer in at least two steps.

It is most preferred if both prepolymerisation and slurry phase steps take place in a loop reactor with a transfer to a gas phase reactor for one or more gas phase steps.

For the first gas phase reactor in the process of the invention, the reaction temperature used will generally be in the range 70 to 90°C, preferably 70 to 85°C. The reactor pressure will generally be in the range 15 to 35 bar, preferably 20 to 33 bar.

For the second and further gas phase reactor, if used in the process of the invention, the reaction temperature used will generally be in the range 60 to 80°C, preferably 65 to 75°C. The reactor pressure will generally be in the range 10 to 33 bar, preferably 18 to 30 bar.

The residence time within any gas phase reactor will generally be 0,5 to 8 hours (e.g. 0,5 to 4 hours).

The hydrogen content within the gas phase reactors is important for controlling polymer properties. It is generally preferred if all the main polymerisation steps (i.e. all steps except prepolymerisation) take place at a temperature of 70°C or more.

The split ratios between reactors are important. In a typical multistage production process, the bulk phase step produces a large excess of the overall polymer. In the present case, the ratios can be controlled in a broader range. Thus the slurry bulk step should produce no more than 80 wt% of the overall polymer. The slurry phase may preferably produce 60 to 17 wt% of the overall polymer, preferably 55 to 20 wt%. The gas phase product may therefore contribute 40 to 83 wt% of the polymer such as 45 to 80 wt%.

Thus, the split (bulk:GP split) is preferably in the range of 80:20 wt% to 15:85 wt%, preferably 70:30 to 20:80 wt%, more preferably 60:40 to 20:80 wt%.

The activity in the gas phase is higher than is typically achieved in a multimodal process with single site catalysts. The ratio of activity in the gas phase/slurry phase may be 0.3 or more, preferably 0,4 or more, or even 0,5 or more..

Polymerisations are preferably heterogeneous as the catalyst does not dissolve in the reaction medium.

Generally the quantity of catalyst used will depend upon the nature of the catalyst, the reactor types and conditions and the properties desired for the polymer product. As is well known in the art hydrogen can be used for controlling the molecular weight of the polymer.

It is a feature of the invention that the claimed catalysts enable the formation of polymers with remarkably high catalyst activities. We observe increases of 20% or more in activity relative to experiments carried out in the presence of MAO alone. These features can be achieved at commercially interesting polymerisation temperatures, e.g. 70°C or more. It is a preferred feature of the invention that the catalysts of the invention are used to polymerise propylene at a temperature of at least 70°C.

### Polymer Properties

The propylene polymers made by the process of the invention are preferably multimodal. Usually, a polymer composition comprising at least two fractions, which have been produced under different polymerisation conditions resulting in different (weight average) molecular weights and comonomer composition for the fractions, is referred to as "multimodal". Accordingly, in this sense the polymers made by the process of the invention are multimodal. The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polymer might show two or more maxima or at least might be distinctly broadened in comparison with the curves for the individual fractions.

The polymers made by the process of the invention may therefore have an MFR₂ of 2 to 100 g/10min, such as 8 to 75 g/10min.

The melting points of the polymers are surprisingly high. Melting points of 150°C or more are possible such as 151°C or more. Further, it can be noted that the high activity of the gas phase step enables the production of polymers with a broader Mw/Mn value, in case there is need for broader polydispersity from polymer property or processability point of view.

### Applications

The polymers of the invention are useful in the manufacture of a variety of end articles such as films (cast, blown or BOPP films), moulded articles (e.g. injection moulded, blow moulded, rotomoulded articles), extrusion coatings and so on. Preferably, polymers made by the process of the invention are used in packaging or automotive applications. Packaging of interest include heavy duty sacks, hygiene films, lamination films, and soft packaging films.

Due to their excellent low temperature impact properties, polymer compositions of the invention are ideal for use in food packaging or automotive parts.

The invention will now be illustrated by reference to the following nonlimiting examples.

### Examples:

### Measurement methods

**ICP analysis (for Al, B, P)** The elemental analysis of a catalyst was performed by taking a solid sample of mass, m. The catalyst was deactivated by substituting the inert storing conditions with ambient air, first passively through a needle and the actively by applying vacuum three times to the sampling container. Samples were dissolved to a volume V by first cooling on dry ice while adding freshly deionised water (5% of V) and nitric acid (HNO₃, 65 %, 5 % of V). The samples were transferred in full to volumetric flasks using deionised water and rinsing the sampling containers. Hydrofluoric acid (HF, 40 %, 3 % of V) was added to the volumetric flasks and volume V obtained by addition of freshly deionised water. The prepared sample solutions were left to stabilise for two hours.

The analysis was run at room temperature using a Thermo Elemental iCAP 6300 Inductively Coupled Plasma - Optical Emission Spectrometer (ICP-OES) which was calibrated using a blank (a solution of 5 % HNO3, 5 % HF in deionised water), and 6 standards of 0.5 ppm, 1 ppm, 10 ppm, 50 ppm, 100 ppm and 300 ppm of Al, with 0.5 ppm, 1 ppm, 5 ppm, 20 ppm, 50 ppm and 100 ppm of B and P in solutions of 5 % HNO3, 3 % HF in deionised water.

Immediately before analysis the calibration is 'resloped' using the blank and 100 ppm Al, 50 ppm B, P standard, a quality control sample (20 ppm Al, 5 ppm B, P in a solution of 5 % HNO3, 3 % HF in DI water) is run to confirm the reslope. The QC sample is also run after every 5th sample and at the end of a scheduled analysis set.

The content of boron was monitored using the 249.773 nm line and the content of phosphorus using 177.495 nm and 178.284 nm lines. The content of aluminium was monitored via the 167.079 nm line, when Al concentration in ICP sample was between 0-10 ppm (calibrated only to 100 ppm) and via the 396.152 nm line for Al concentrations above 10 ppm.

The content of hafnium was monitored using the 282.022 nm and 339.980 nm lines and the content for zirconium using 339.198 nm line.

The reported values are an average of three successive aliquots taken from the same sample and are related back to the original catalyst by inputting the original mass of sample, m, and the dilution volume, V, into the software.

### DSC analysis

The melting point (Tₘ) and crystallization temperature (T_{c}) were determined on a DSC200 TA instrument, by placing a 5-7 mg polymer sample, into a closed DSC aluminum pan, heating the sample from -10 °C to 210 °C at 10 °C/min, holding for 5 min at 210 °C, cooling from 210 °C to -10 °C, holding for 5 min at -10 °C, heating from -10 °C to 210 °C at 10 °C/min. The reported Tₘ is the maximum of the curve from the second heating scan and T_{c} is the maximum of the curve of the cooling scan.

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 230°C and may be determined at different loadings such as 2.16 kg (MFR₂) or 21.6 kg (MFR₂₁).

### GPC: Molecular weight averages, molecular weight distribution, and polydispersity index (Mₙ, M_{w}, M_{w}/Mₙ)

Molecular weight averages (Mw, Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99. A Waters GPCV2000 instrument, equipped with differential refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert butyl-4-methylphenol) as solvent at 140 °C and at a constant flow rate of 1 mL/min. 209.5 µL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants for PS, PE and PP used are as per ASTM D 6474-99. All samples were prepared by dissolving 0.5 - 4.0 mg of polymer in 4 mL (at 140 °C) of stabilized TCB (same as mobile phase) and keeping for max. 3 hours at max. 160°C with continuous gentle shaking prior sampling into the GPC instrument.

### Prepolymerisation degree (DP): weight of polymer matrix/weight of solid catalyst before prepolymerisation step

### Metallocene Synthesis:

### Catalysts

The metallocenes MC1 (rac-anti-dimethylsilandiyl(2-methyl-4-phenyl-5-methoxy-6-*tert*-butyl-indenyl)(2-methyl-4-(4-*tert*-butylphenyl)indenyl)zirconium dichloride) and MC2 (rac-anti-dimethylsilandiyl(2-methyl-4-(4-*tert*-butylphenyl)-5-methoxy-6-*tert*-butyl-indenyl)(2-methyl-4-(4-*tert*-butyl-phenyl)indenyl)zirconium dichloride) have been synthesized as described in WO2013/007650.

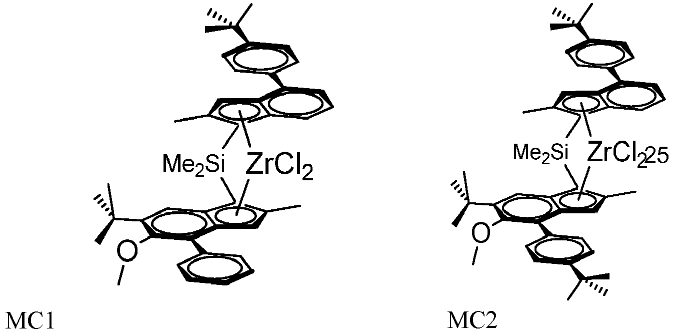

MAO Chemtura (30 wt% in toluene) or Albemarle (30 wt% in toluene) were used as received.

Surfactant: The mixture of perfluoroalkylethyl acrylate esters (CAS 65605-70-1) used as the surfactant was purchased from the Cytonix corporation or Wilshire Technologies, dried over activated molecular sieves (2 times) and degassed by argon bubbling prior to use.

Perfluoro-1,3-dimethylcyclohexane (PFC, CAS 335-27-3) was dried over activated molecular sieves (2 times) and degassed by argon bubbling prior to use.

Triphenylcarbeniumtetrakis(pentafluorophenyl)borate (short name trityl tetrakis (pentafluoro-phenyl)borate) (CAS 136040-19-2) was purchased from Acros and used as received.

### Catalyst synthesis:

### Comp Cat 1 and Comp Cat 2 (Comparative)

Inside the glovebox, 80 µL of dry and degassed surfactant were mixed with 2 mL of MAO solution in a septum bottle and left to react overnight. The following day, 58.70 mg of MC1 (0,076 mmol,) were dissolved with 4 mL of the MAO solution in another septum bottle and left to stir inside the glovebox.

After 60 minutes, 1 mL of the surfactant solution and the 4 mL of the MAO-metallocene solution were successively added into a 50mL emulsification glass reactor containing 40 mL of PFC at -10 °C and equipped with an overhead stirrer (stirring speed = 600 rpm). A red emulsion formed immediately and stirred during 15 minutes at -10 °C / 600 rpm. Then the emulsion was transferred via a 2/4 teflon tube to 100 mL of hot PFC at 90 °C, and stirred at 600 rpm until the transfer is completed, then the speed was reduced to 300 rpm. After 15 minutes stirring, the oil bath was removed and the stirrer turned off. The catalyst was left to settle up on top of the PFC and after 35 minutes the solvent was siphoned off. The remaining catalyst was dried during 2 hours at 50 °C over an argon flow.
Comp cat 1: 0.71 g of a red solid catalyst was collected
Comp cat 2: 0.59 g of a red solid catalyst was collected

### Catalyst 3 (of the invention)

Inside the glovebox, 58.7 mg of metallocene MC1 (0,076 mmol) was mixed with 4 ml of MAO solution in a septum bottle and the solution was stirred for 60 minutes and then 129.1 mg of trityl tetrakis(pentafluorophenyl)borate was added. The mixture was left to react overnight at room temperature inside the glovebox. Then, in another septum bottle, 80 µL of dry and degassed surfactant was mixed with 2 mL of MAO. The solutions were left under stirring over night. The following day, 4 mL of the MAO-metallocene-borate solution and 1 mL of the surfactant-MAO solution were successively added into a 50 mL emulsification glass reactor containing 40mL of PFC at -10 °C and equipped with an overhead stirrer (stirring speed = 600 rpm).. A red emulsion formed immediately and stirred during 15 minutes at -10 °C / 600 rpm. Then the emulsion was transferred via a 2/4 teflon tube to 100 mL of hot PFC at 90 °C and stirred at 600 rpm until the transfer is completed. Then the speed was reduced to 300 rpm. After 15 minutes stirring, the oil bath was removed and the stirrer turned off. The catalyst was left to settle up on top of the PFC and after 35 minutes the solvent was siphoned off. The remaining red catalyst was dried during 2 hours at 50 °C over an argon flow. 0.66 g (cat 3) of a red solid catalyst was obtained.

### Comp Cat 4 (Comparative)

Inside the glovebox, 54 µL of dry and degassed surfactant were mixed with 2 mL of MAO solution in a septum bottle and left to react overnight. The following day, 44.50 mg of MC2(0,051 mmol) were dissolved with 4 mL of the MAO solution in another septum bottle and left to stir inside the glovebox.

After 60 minutes, 1 mL of the surfactant solution and the 4 mL of the MAO-metallocene solution were successively added into a 50mL emulsification glass reactor containing 40 mL of PFC at -10 °C and equipped with an overhead stirrer (stirring speed = 600 rpm). A red emulsion formed immediately and stirred during 15 minutes at -10 °C / 600 rpm. Then the emulsion was transferred via a 2/4 teflon tube to 100 mL of hot PFC at 90 °C, and stirred at 600 rpm until the transfer is completed, then the speed was reduced to 300 rpm. After 15 minutes stirring, the oil bath was removed and the stirrer turned off. The catalyst was left to settle up on top of the PFC and after 35 minutes the solvent was siphoned off. The remaining catalyst was dried during 2 hours at 50 °C over an argon flow. 1,0 g (cat 4) of a red solid catalyst was obtained.

### Catalyst 5 (of the invention)

Inside the glovebox, 44.50 mg of metallocene MC2 (0,051 mmol) was mixed with 4 ml of MAO solution in a septum bottle and the solution was stirred for 60 minutes and then 84.70 mg of trityl tetrakis(pentafluorophenyl)borate was added. The mixture was left to react overnight at room temperature inside the glovebox. Then, in another septum bottle, 80 µL of dry and degassed surfactant was mixed with 2 mL of MAO. The solutions were left under stirring over night. The following day, 4 mL of the MAO-metallocene-borate solution and 1 mL of the surfactant-MAO solution were successively added into a 50 mL emulsification glass reactor containing 40 mL of PFC at -10 °C and equipped with an overhead stirrer (stirring speed = 600 rpm). A red emulsion formed immediately and stirred during 15 minutes at -10 °C / 600 rpm. Then the emulsion was transferred via a 2/4 teflon tube to 100 mL of hot PFC at 90 °C and stirred at 600 rpm until the transfer is completed. Then the speed was reduced to 300 rpm. After 15 minutes stirring, the oil bath was removed and the stirrer turned off. The catalyst was left to settle up on top of the PFC and after 35 minutes the solvent was siphoned off. The remaining red catalyst was dried during 2 hours at 50 °C over an argon flow. 0.48 g of a red solid catalyst was obtained.

### Off-line prepolymerization procedure

Catalysts were pre-polymerised according to the following procedure: Off-line pre-polymerisation experiments were done in a 125 mL pressure reactor equipped with gas-feeding lines and an overhead stirrer. Dry and degassed perfluoro-1.3-dimethylcyclohexane (15 cm³) and the desired amount of the catalyst (Table 1) to be pre-polymerised were loaded into the reactor inside a glove box and the reactor was sealed. The reactor was then taken out from the glove box and placed inside a water cooled bath kept at 25 °C. The overhead stirrer and the feeding lines were then connected. The experiment was started by opening the propylene feed into the reactor. The propylene feed was left open and the monomer consumption was compensated by keeping the total pressure in the reactor constant (about 5 barg). The experiment was continued for the polymerisation time (Table 1) sufficient to provide the desired degree of polymerisation (DP 2,5 - 4.0, Table 1). The reactor was then taken back inside the glove box before opening and the content was poured into a glass vessel. The perfluoro-1.3-dimethylcyclohexane was evaporated until a constant weight of the pre-polymerised catalyst (yield) was obtained. Catalyst properties are presented in tables 1a/b.

**Table 1a**

| **Catalyst type** | **Catalyst Complex** | **Al/Zr** | **B/Zr** | **MC content in prepolymerised catalyst** |
|---|---|---|---|---|
| | | molar ratio | molar ratio | wt% |
| Comp Cat 1 | MC1 | 253 | - | 1,35 |
| Comp Cat 2 | MC1 | 253 | - | 1,13 |
| Cat 3 | MC1 | 287 | 1,8 | 1,23 |
| Comp cat 4 | MC2 | 440 | - | 0,65 |
| Cat 5 | MC2 | 401 | 1,8 | 0,78 |

**Table 1b**

| Catalyst | Prepol time/min | Yield of prepolym. cat/g | Amount of non-prepolym cat/mg | Prepol degree (DP) g/g |
|---|---|---|---|---|
| Comp Cat 1 | 13 | 2,50 | 669 | 2,7 |
| Comp Cat 2 | 14 | 2,29 | 525 | 3,4 |
| Cat 3 | 18 | 2,14 | 593 | 2,6 |
| Comp Cat 4 | 18 | 2,90 | 605 | 3,8 |
| Cat 5 | 22 | 1,83 | 415 | 3,4 |

### Polymerization examples: 2-step bulk - gas phase propylene homopolymerization, 20-L reactor

Triethylaluminum was purchased from Aldrich and used as a 1 M solution in n-hexane. Hydrogen is provided by Air Liquide.
Propylene is provided by Air Liquide and purified before use.

### Step1. Bulk propylene homopolymerization

A stirred autoclave (double helix stirrer) with a volume of 21.2 dm³ containing 0.2 barg propylene was filled with additional 3.97 kg propylene plus a certain amount of H2, if needed. After adding of 0.73 mmol triethylaluminium, (1 molar solution in n-hexane) using a stream of 250 g propylene, the solution was stirred at 20 °C and 250 rpm for 20 min. Then the reactor was brought up to the set prepolymerization temperature and the catalyst was injected as described in the following. The solid, pre-polymerized catalyst (type, amount and degree of polymerisation as listed in the tables) was loaded into a 5-mL stainless steel vial inside the glovebox, the vial was attached to the autoclave, then a second 5-mL vial containing 4 ml n-hexane and pressurized with 10 bars of N2 was added on top, the valve between the two vials was opened and the solid catalyst was contacted with hexane under N2 pressure for 2 s, then flushed into the reactor with 250 g propylene. Stirring speed was increased to 250 rpm and pre-polymerisation was run for the set time.

At the end of the prepolymerization step, the stirring speed was increased to 350 rpm and the polymerisation temperature raised to the set polymerization temperature (80°C). When the internal reactor temperature reached 71 °C, the chosen H2 amount was added with a fixed flow via a thermal mass flow controller (MFC). The set reactor temperature was held constant throughout the polymerization. The polymerization time was measured, starting when the temperature was 2 °C below the set polymerization temperature.

### Step2: Gas Phase propylene homopolymerization

After the bulk step was finished, the stirrer speed was adjusted to 50 rpm and the reactor pressure was reduced to 0.5 bar-g by venting the monomer. Afterwards the stirrer speed was set to either 250 rpm (or 180 rpm for examples 2 and 6) and the reactor temperature to 80°C and the chosen amount of H2 was dosed via MFC. Then the reactor P and T were held constant by propylene feed via MFC until the target split had been reached.

The reaction was stopped by setting the stirrer speed to 20 rpm, cooling the reactor to 30°C and flashing the volatile components.

After flushing the reactor twice with N2 and one vacuum/N2 cycle, the product was taken out and dried overnight in a hood. 100 g of the polymer was stabilised with 0.2 wt-% Ionol CP and 0.1 wt-% of Sandostab P-EPQ (dissolved in acetone), then dried overnight in a fume hood and then 2 hours in a vacuum drying oven at 60°C.

The polymerization conditions are summarized in table 2. The results of polymer analysis are listed in table 3.

**Table 2 Polymerisation conditions**

| | Ex 1-Comp | Ex 2- Comp | Ex 3 -Inv | Ex 4 -Inv | Ex 5-Comp | Ex 6 -Inv |
|---|---|---|---|---|---|---|
| Catalyst | Comp Cat 2 | Comp Cat 1 | Cat 3 | Cat 3 | Comp Cat 4 | Cat 5 |
| **Prepoly. Ia** 20°C, 10 min | | | | | | |
| Catalyst amount*/ mg | 48,4 | 54,1 | 21,9 | 22,4 | 28,5 | 23,6 |
| H₂/NL | 0 | 0 | 0 | 0 | 0,1 | 0,1 |
| **Bulk step Ib** 80°C, 30 min | | | | | | |
| Total H₂/NL | 1,8 | 3,5 | 1,8 | 3,5 | 3,0 | 3,5 |
| Total Yield/g | 1530 | 2230 | 1992 | 1171 | 1600 | 970 |
| Activity/ kgPP/g cat/h* | 41,8 | 45,5 | 35,7 | 24,4 | 63,1 | 45,9 |
| Productivity kgPP/g cat* | 20,9 | 22,8 | 17,9 | 12,2 | 31,5 | 23,0 |
| MFR₂ bulk calc/ g/10 min | 3,4 | 3,5 | 4,6 | 35 | 16 | 43 |

| **Gas Phase II** 80°C | | | | | | |
|---|---|---|---|---|---|---|
| Pressure/barg | 30 | 30 | 31 | 30 | 25 | 25 |
| Time/min | 120 | 117 | 157 | 126 | 137 | 54 |
| C₃ feed/g | 520 | 1000 | 1600 | 900 | 700 | 430 |
| H₂/NL | 1,48 | 1,48 | 1,48 | 1,48 | 1,10 | 1,45 |
| Activity/ kgPP/g cat/h* | 5,4 | 9,5 | **27,9** | **19,3** | 10,7 | **20,1** |
| Productivity kgPP/g cat* | 10,7 | 18,5 | 72,9 | 40,5 | 24,5 | 18,1 |
| Split/ bulk/ GP/ wt-%/wt-% | 66/34 | 55/45 | 20/80 | 23/77 | 56/44 | 56/44 |
| MFR₂ GP calc/ g/10 min | 97 | 33 | 12 | 17 | 39 | 114 |
| MFR₂ final/ g/10 min | 10,6 | 34,2 | 9,8 | 20,1 | 26,0 | 63,0 |

| | | | | | | |
|---|---|---|---|---|---|---|
| * Catalyst amount in the feed and activity and productivity definitions given as amounts of non off-line prepolymerisation | | | | | | |

**Table 3. Polymer properties**

| **Example** | **cat**. | **T_{c}** | **Tₘ** | **Mₙ** | **M_{w}** | **M_{z}** | **Mᵥ** | **PDI** |
|---|---|---|---|---|---|---|---|---|
| | | °C | °C | | | | | |
| 1-Comp | Comp Cat 2 | 107,7 | 148,6 | 77000 | 226000 | 616000 | 197000 | 2,94 |
| 2-Comp | Comp Cat 1 | 107,8 | 148,3 | 43000 | 160000 | 472000 | 139000 | 3,72 |
| | | | | | | | | |
| 3-Inv | Cat 3 | 110,2 | 152,5 | 78000 | 204000 | 403000 | 185000 | 2,62 |
| 4-Inv | Cat 3 | 109,7 | 152,4 | 41000 | 189000 | 515000 | 165000 | 4,61 |
| | | | | | | | | |
| 5-Comp | Comp Cat 4 | 107,9 | 149,2 | | | | | |
| | | | | | | | | |
| 6-Inv | Cat 5 | 107,7 | 151,8 | 31000 | 142000 | 588000 | 119000 | 4,58 |

Examples 3,4 and 6 have higher melting points and a higher proportion of gas phase product. By the method of the invention it is also possible to increase the polydispersity index.

## Claims

1. A process for the preparation of a propylene homopolymer in a multistage polymerisation process in the presence of a single site catalyst, said process comprising:
(I) in a slurry polymerisation step, polymerising propylene in the presence of said single site catalyst; and subsequently
(II) in a gas polymerisation step polymerising propylene in the presence of catalyst and polymer from step (I) so as to form a propylene homopolymer;
wherein said catalyst comprises
(i) a metallocene complex of a Group 4 metal, said metallocene comprising at least two cyclopentadienyl type ligands;
(ii) a boron based cocatalyst; and
(iii) an aluminoxane cocatalyst;
said catalyst being in solid form, preferably in solid particulate form, and being free from an external carrier.

2. A process for the preparation of a propylene homopolymer as claimed in claim 1 in a multistage polymerisation process in the presence of a single site catalyst, said process comprising:
(Ia) prepolymerising a single site catalyst in the presence of propylene;
(Ib) in a slurry polymerisation step, polymerising propylene with the prepolymerised catalyst of step (Ia); and subsequently
(II) in a gas polymerisation step polymerising propylene in the presence of catalyst and polymer from step (Ib) so as to form a propylene homopolymer;
wherein said catalyst comprises
(i) a metallocene complex of a Group 4 metal, said metallocene comprising at least two cyclopentadienyl type ligands;
(ii) a boron based cocatalyst; and
(iii) an aluminoxane cocatalyst;
said catalyst being in solid form, preferably in solid particulate form, and being free from an external carrier.

3. A process as claimed in claim 1 or 2 wherein step (I) is a bulk step and the bulk-to-gas phase ratio of the produced material (bulk/GP split) is lower than 80:20.

4. A process as claimed in any preceding claim wherein the boron based cocatalyst is a borate cocatalyst.

5. A process as claimed in any preceding claim wherein the solid catalyst is obtainable by a process in which
(a) a liquid/liquid emulsion system is formed, said liquid/liquid emulsion system comprising a solution of the catalyst components (i) to (iii) dispersed in a solvent so as to form dispersed droplets; and
(b) solid particles are formed by solidifying said dispersed droplets.

6. A process as claimed in claim 5 wherein the solid catalyst is obtaiend using a catalyst prepolymerisation step (c) wherein the solid catalyst from step (b) is prepolymerised with at least one alpha-olefin monomer and optionally one or more C₃-C₁₀ alpha-olefin comonomers.

7. A process as claimed in claim 6 wherein catalyst prepolymerisation is effected using propylene.

8. A process as claimed in any preceding claim wherein step (I) or (Ib) is a slurry bulk step.

9. A process as claimed in any preceding claim wherein the mol ratio of boron to the transition metal ion of the metallocene in the catalyst may be in the range 1:10 to 10:1.

10. A process as claimed in any preceding claim wherein the polymerisation temperature in steps (I) or (Ib) is above 70°C.

11. A process as claimed in any preceding claim wherein the complex is of formula (II): 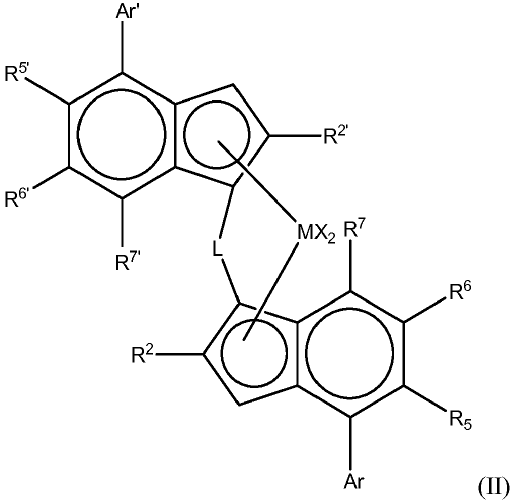 wherein
M is zirconium or hafnium;
each X is a sigma ligand;
L is a divalent bridge selected from -R'₂C-, -R'₂C-CR'₂-, -R'₂Si-, -R'₂Si-SiR'₂-, -R'₂Ge-, wherein each R' is independently a hydrogen atom, C₁-C₂₀-hydrocarbyl, tri(C₁-C₂₀-alkyl)silyl, C₆-C₂₀-aryl, C₇-C₂₀-arylalkyl or C₇-C₂₀-alkylaryl;
R² and R^{2'} are each independently a C₁-C₂₀ hydrocarbyl radical optionally containing one or more heteroatoms from groups 14-16;
R⁵ and R^{5'} are each independently hydrogen, C₁₋₂₀ hydrocarbyl group optionally containing one or more heteroatoms from groups 14-16 and optionally substituted by one or more halo atoms;
R⁶ and R^{6'} are each independently hydrogen or a C₁₋₂₀ hydrocarbyl group optionally containing one or more heteroatoms from groups 14-16; or
R⁵ and R⁶ taken together can form a 5 or 6 membered saturated or unsaturated carbon ring fused to the 6-membered ring of the indenyl group; or
R⁵*^{'}* and R^{6'} taken together can form a 5 or 6 membered saturated or unsaturated carbon ring fused to the 6-membered ring of the indenyl group;
R⁷ and R^{7'} are each independently hydrogen or C₁₋₂₀ hydrocarbyl group optionally containing one or more heteroatoms from groups 14-16;
Ar is independently an aryl or heteroaryl group having up to 20 carbon atoms optionally substituted by one or more groups R¹;
Ar' is independently an aryl or heteroaryl group having up to 20 carbon atoms optionally substituted by one or more groups R¹;
each R¹ is a C₁₋₂₀ hydrocarbyl group or two R¹ groups on adjacent carbon atoms taken together can form a fused 5 or 6 membered non aromatic ring with the Ar group, said ring being itself optionally substituted with one or more groups R⁴; and
each R⁴ is a C₁₋₂₀ hydrocarbyl group.

12. A process as claimed in any preceding claim wherein the complex is of formula (VII) or (VII'): 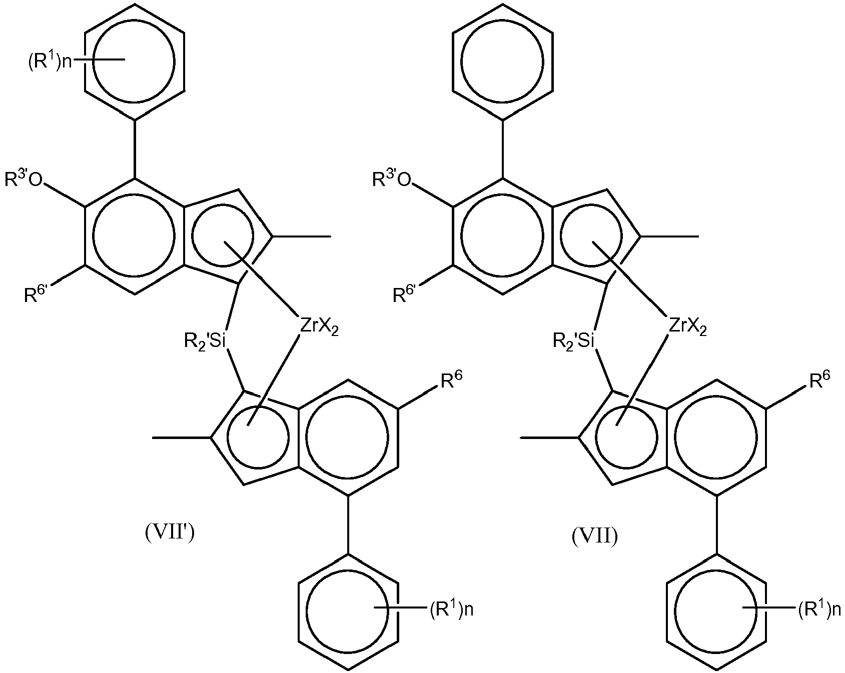
wherein each X is a sigma ligand, preferably each X is independently a hydrogen atom, a halogen atom, C₁₋₆-alkoxy group, C₁₋₆-alkyl, phenyl or benzyl group;
R' is independently a C₁₋₆ alkyl or C₃₋₁₀ cycloalkyl;
R¹ is independently C₃₋₈ alkyl;
R⁶ is hydrogen or a C₃₋₈ alkyl group;
R^{6'} is a C₃₋₈ alkyl group or C₆₋₁₀ aryl group;
R^{3'} is a C₁₋₆ alkyl group, or C₆₋₁₀ aryl group optionally substituted by one or more halo groups; and
n is independently 0, 1 or 2.

13. A process as claimed in any preceding claim wherein the bulk-to-gas phase ratio of the produced material (bulk/GP split) is lower than 60:40 wt%.

14. A process as claimed in any preceding claim having one or two gas phase steps.

## Patentansprüche

1. Ein Verfahren zur Vorbereitung eines Propylen-Homopolymers in einem mehrstufigen Polymerisierungsverfahren in Präsenz eines Einzelstandort-Katalysators, wobei besagtes Verfahren folgendes umfasst:
(I) in einem Schlicker-Polymerisierungsschritt, Polymerisieren von Propylen in Präsenz des besagten Einzelstandort-Katalysators; und danach
(II) in einem Gas-Polymerisierungsschritt, Polymerisieren von Propylen in Präsenz des Katalysators und Polymers aus Schritt (I), derart, dass ein Propylen-Homopolymer gebildet wird; **dadurch gekennzeichnet, dass** besagter Katalysator folgendes umfasst:
(i) einen Metallocen-Komplex aus einem Metall der Gruppe 4, wobei besagtes Metallocen mindestens zwei Liganden vom Typ Cyclopentadienyl umfasst;
(ii) einen Cokatalysator auf Bor-Basis; und
(iii) einen Aluminoxan-Cokatalysator;
wobei besagter Katalysator in solider Form, vorzugsweise in der Form von soliden Partikeln und frei von einem externen Träger ist.

2. Ein Verfahren zur Vorbereitung eines Propylen-Homopolymers in einem mehrstufigen Polymerisierungsverfahren in Präsenz eines Einzelstandort-Katalysators, wie im Anspruch 1 beschrieben, wobei besagtes Verfahren folgendes umfasst:
(Ia) das Vorpolymerisieren eines Einzelstandort-Katalysators in Präsenz von Propylen;
(Ib) in einem Schlicker-Polymerisierungsschritt, Polymerisieren von Propylen mit dem vorpolymerisierten Katalysator aus Schritt (Ia); und danach
(II) in einem Gas-Polymerisierungsschritt, Polymerisieren von Propylen in Präsenz des Katalysators und Polymers aus Schritt (Ib), derart, dass ein Propylen-Homopolymer gebildet wird;
**dadurch gekennzeichnet, dass** besagter Katalysator folgendes umfasst:
(i) einen Metallocen-Komplex aus einem Metall der Gruppe 4, wobei besagtes Metallocen mindestens zwei Liganden vom Typ Cyclopentadienyl umfasst;
(ii) einen Cokatalysator auf Bor-Basis; und
(iii) einen Aluminoxan-Cokatalysator;
wobei besagter Katalysator in solider Form, vorzugsweise in der Form von soliden Partikeln und frei von einem externen Träger ist.

3. Ein Verfahren gemäß Anspruch 1 oder 2, **dadurch gekennzeichnet, dass** Schritt (I) ein Masse-Schritt ist und das Masse-Gas-Verhältnis des produzierten Materials (Masse/GP-Split) kleiner als 80:20 ist.

4. Ein Verfahren gemäß einem der vorstehenden Ansprüche, **dadurch gekennzeichnet, dass** der Cokatalysator auf Bor-Basis ein Borat-Cokatalysator ist.

5. Ein Verfahren gemäß einem der vorstehenden Ansprüche, **dadurch gekennzeichnet, dass** der solide Katalysator mit Hilfe eines Verfahrens gewonnen wird, in dem
(a) ein flüssig/flüssig-Emulsionssystem gebildet wird, wobei besagtes flüssig/flüssig-Emulsionssystem eine Lösung der Katalysatorkomponenten (i) bis (iii) umfasst, die in einem Lösungsmittel dispergiert sind, derart, dass sie dispergierte Tröpfchen bilden; und
(b) solide Partikel gebildet werden, indem die besagten dispergierten Tröpfchen verfestigt werden.

6. Ein Verfahren gemäß Anspruch 5, **dadurch gekennzeichnet, dass** der solide Katalysator durch Verwendung eines Katalysator-Vorpolymerisierungsschritts (c) gewonnen wird, indem der solide Katalysator aus Schritt (b) mit mindestens einem alpha-olefinen Monomer und, optional, einem oder mehreren C₃-C₁₀ alpha-olefinen Comonomeren vorpolymerisiert wird.

7. Ein Verfahren gemäß Anspruch 6, **dadurch gekennzeichnet, dass** die Katalysator-Vorpolymerisierung unter Verwendung von Propylen durchgeführt wird.

8. Ein Verfahren gemäß einem der vorstehenden Ansprüche, **dadurch gekennzeichnet, dass** Schritt (I) oder (Ib) ein Schlicker-Masse-Schritt ist.

9. Ein Verfahren gemäß einem der vorstehenden Ansprüche, **dadurch gekennzeichnet, dass** das Molverhältnis von Bor zum Übergangsmetall-Ion des Metallocens im Katalysator in der Spanne von 1:10 bis 10:1 sein kann.

10. Ein Verfahren gemäß einem der vorstehenden Ansprüche, **dadurch gekennzeichnet, dass** die Polymerisierungstemperatur in den Schritten (I) oder (Ib) über 70° C beträgt.

11. Ein Verfahren gemäß einem der vorstehenden Ansprüche, **dadurch gekennzeichnet, dass** der Komplex folgender Formel (II) entspricht: 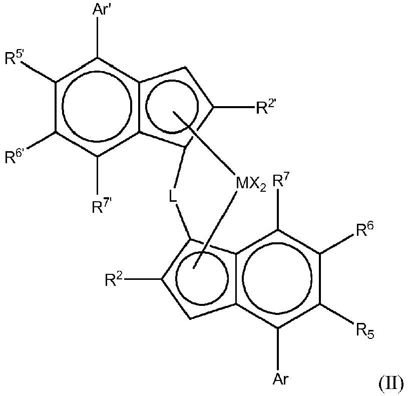 Wo:
M Zirkonium oder Hafnium ist;
jedes X ein Sigma-Ligand ist;
L eine divalente Brücke ist, die aus -R'₂C-, -R'₂C-CR'₂-,-R'₂Si-, -R'₂Si-SiR'₂-, -R'₂Ge- ausgewählt wird, wobei jedes R' unabhängig ein Wasserstoffatom, C₁₋C₂₀-Wasserstoffrest, tri(C₁-C₂₀-Alkyl)Silyl, C₆-C₂₀-Aryl, C₇C₂₀-Arylalkyl oder C₇C₂₀-Alkylaryl ist;
R² und R^{2'} jeder unabhängig ein C₁-C₂₀ Wasserstoffrest-Radikal ist, das optional ein oder mehrere Heteroatome aus den Gruppen 14-16 enthält;
R⁵ und R^{5'} jeder unabhängig Wasserstoff, C₁₋₂₀ Wasserstoffrestgruppe ist, die optional ein oder mehrere Heteroatome aus den Gruppen 14-16 enthält und optional durch ein oder mehrere Halo-Atome substituiert sind;
R⁶ und R^{6'} jeder unabhängig Wasserstoff oder eine C₁₋₂₀ Wasserstoffrest-Gruppe ist, die optional ein oder mehrere Heteroatome aus den Gruppen 14-16 enthalten; oder
wo R⁵ und R⁶ zusammengenommen einen 5- oder 6-gliedrigen gesättigten oder ungesättigten Kohlenstoffring bilden können, der mit dem 6-gliedrigen Ring der Indenyl-Gruppe verschmolzen wird; oder
wo R^{5'} und R^{6'} zusammengenommen einen 5- oder 6-gliedrigen gesättigten oder ungesättigten Kohlenstoffring bilden können, der mit dem 6-gliedrigen Ring der Indenyl-Gruppe verschmolzen wird; oder
wo R⁷ und R^{7'} jeder unabhängig Wasserstoff oder C₁₋₂₀ eine Wasserstoffrest-Gruppe ist, die optional ein oder mehrere Heteroatome aus den Gruppen 14-16 enthalten;
Ar unabhängig eine Aryl- oder Heteroaryl-Gruppe mit bis zu 20 Kohlenstoffatomen ist, die optional durch eine oder mehrere R¹-Gruppen substituiert wird;
Ar' unabhängig eine Aryl- oder Heteroaryl-Gruppe mit bis zu 20 Kohlenstoffatomen ist, die optional durch eine oder mehrere R¹-Gruppen substituiert wird;
Jeder R¹ eine C₁₋₂₀ Wasserstoffrest-Gruppe ist oder wo 2 R¹-Gruppen auf aneinander grenzenden Kohlenstoffatomen zusammen genommen einen verschmolzenen 5- oder 6-gliedrigen, nicht aromatischen Ring mit der Ar-Gruppe bilden können, wobei besagter Ring selbst optional mit einer oder mehreren R⁴-Gruppen substituiert werden kann; und wo R⁴ eine C₁₋₂₀ Wasserstoffrest-Gruppe ist.

12. Ein Verfahren gemäß einem der vorstehenden Ansprüche, **dadurch gekennzeichnet, dass** der Komplex folgender Formel (VII) oder (VII') entspricht: 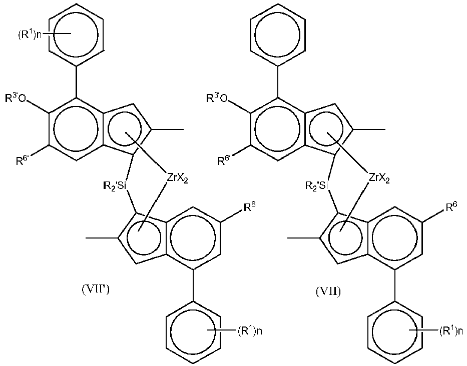
wobei jedes X ein Sigma-Ligand ist, wo jedes X vorzugsweise unabhängig ein Wasserstoffatom, ein Halogenatom, eine C₁₋₆-Alkoxy-Gruppe, eine C₁₋₆-Alkyl, -Phenyl oder -Benzyl-Gruppe ist;
R' unabhängig ein C₁₋₆ Alkyl oder eine C₃₋₁₀ Cycloalkyl ist;
R¹ unabhängig ein C₃₋₈ Alkyl ist;
R⁶ Wasserstoff oder eine C₃₋₈ Alkyl-Gruppe ist;
R⁶ eine C₃₋₈ Alkyl-Gruppe oder eine C₆₋₁₀ Arylgruppe ist;
R³ eine C₁₋₆ Alkyl-Gruppe oder eine, optional durch eine oder mehrere Halo-Gruppen substituierte C₆₋₁₀ Arylgruppe ist; und
N unabhängig 0, 1 oder 2 ist.

13. Ein Verfahren gemäß einem der vorstehenden Ansprüche, **dadurch gekennzeichnet, dass** das Masse-Gas-Verhältnis des produzierten Materials (Masse/GP-Split) kleiner als 60:40 %-Gewicht ist.

14. Ein Verfahren gemäß einem der vorstehenden Ansprüche, **dadurch gekennzeichnet, dass** es einen oder zwei Gasphasenschritt(e) beinhaltet.

## Revendications

1. Processus pour la préparation d'un homopolymère de propylène dans un processus de polymérisation à plusieurs étapes en présence d'un catalyseur de site unique, ledit processus comprenant :
(I) dans une étape de polymérisation de pâte, la polymérisation de propylène en présence dudit catalyseur de site unique ; et par la suite
(II) dans une étape de polymérisation de gaz, la polymérisation de propylène en présence de catalyseur et de polymère de l'étape (I) afin de former un homopolymère de propylène ;
dans lequel ledit catalyseur comprend
(i) un complexe de métallocène d'un métal du Groupe 4, ledit métallocène comprenant au moins deux ligands de type cyclopentadiényle ;
(ii) un cocatalyseur à base de bore ; et
(iii) un cocatalyseur d'aluminoxane ;
ledit catalyseur étant sous forme solide, de préférence sous forme particulaire solide, et étant exempt d'un porteur externe.

2. Processus pour la préparation d'un homopolymère de propylène selon la revendication 1 dans un processus de polymérisation à plusieurs étapes en présence d'un catalyseur de site unique, ledit processus comprenant :
(Ia) la prépolymérisation d'un catalyseur de site unique en présence de propylène ;
(Ib) dans une étape de polymérisation de pâte, la polymérisation de propylène avec le catalyseur prépolymérisé de l'étape (Ia) ; et par la suite
(II) dans une étape de polymérisation de gaz, la polymérisation de propylène en présence de catalyseur et du polymère de l'étape (Ib) afin de former un homopolymère de propylène ;
dans lequel ledit catalyseur comprend
(i) un complexe de métallocène d'un métal du Groupe 4, ledit métallocène comprenant au moins deux ligands de type cyclopentadiényle ;
(ii) un cocatalyseur à base de bore ; et
(iii) un cocatalyseur d'aluminoxane ;
ledit catalyseur étant sous forme solide, de préférence sous forme particulaire solide, et étant exempt d'un porteur externe.

3. Processus selon la revendication 1 ou 2, dans lequel l'étape (I) est une étape en vrac et le rapport vrac sur phase gazeuse de la matière produite (séparation vrac / GP) est inférieur à 80:20.

4. Processus selon n'importe quelle revendication précédente dans lequel le cocatalyseur à base de bore est un cocatalyseur au borate.

5. Processus selon n'importe quelle revendication précédente dans lequel le catalyseur solide peut être obtenu par un processus dans lequel
(a) un système d'émulsion liquide / liquide est formé, ledit système d'émulsion liquide / liquide comprenant une solution des composants de catalyseur (i) à (iii) dispersée dans un solvant afin de former des gouttelettes dispersées ; et
(b) des particules solides sont formées par solidification desdites gouttelettes dispersées.

6. Processus selon la revendication 5, dans lequel le catalyseur solide est obtenu en utilisant une étape de prépolymérisation de catalyseur (c) dans lequel le catalyseur solide provenant de l'étape (b) est prépolymérisé avec au moins un monomère d'alpha-oléfine et de manière facultative un ou plusieurs comonomères d'alpha-oléfine en C₃-C₁₀.

7. Processus selon la revendication 6, dans lequel la prépolymérisation de catalyseur est effectuée en utilisant du propylène.

8. Processus selon n'importe quelle revendication précédente, dans lequel l'étape (I) ou (Ib) est une étape de pâte en vrac.

9. Processus selon n'importe quelle revendication précédente, dans lequel le rapport molaire du bore sur l'ion de métal de transition du métallocène dans le catalyseur peut être dans la plage de 1:10 à 10:1.

10. Processus selon n'importe quelle revendication précédente dans lequel la température de polymérisation dans les étapes (I) ou (Ib) est au-dessus de 70 °C.

11. Processus selon n'importe quelle revendication précédente dans lequel le complexe est de formule (II) : 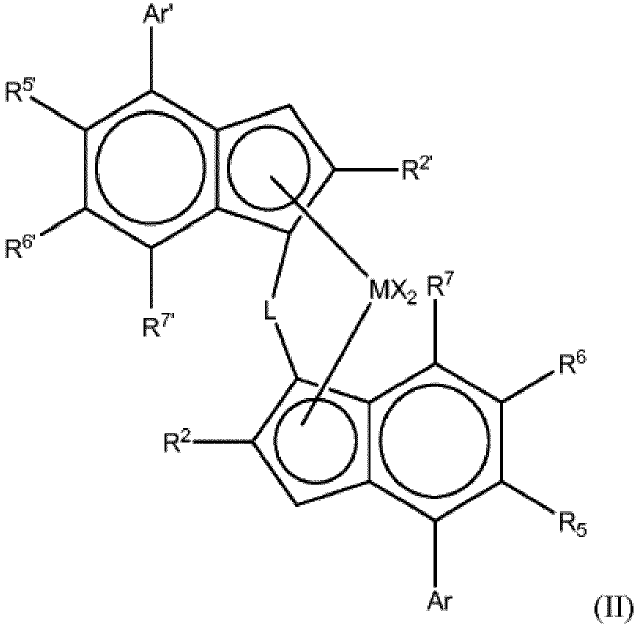 dans laquelle
M est du zirconium ou du hafnium ;
chaque X est un ligand sigma ;
L est un pont divalent sélectionné à partir de -R'₂C-, -R'₂C-CR'₂-, -R'₂Si-, -R'₂Si-SiR'₂-, -R'₂Ge-, dans lesquels chaque R' est indépendamment un atome d'hydrogène, hydrocarbyle en C₁-C₂₀, tri(alkyle en C₁-C₂₀)silyle, aryle en C₆-C₂₀, arylalkyle en C₇-C₂₀ ou alkylaryle en C₇-C₂₀ ;
R² et R^{2'} sont chacun indépendamment un radical hydrocarbyle en C₁-C₂₀ contenant de manière facultative un ou plusieurs hétéroatomes provenant des groupes 14-16 ;
R⁵ et R^{5'} sont chacun indépendamment de l'hydrogène, ou un groupe hydrocarbyle en C₁₋₂₀ contenant de manière facultative un ou plusieurs hétéroatomes provenant des groupes 14-16 et substitués de manière facultative par un ou plusieurs atomes d'halogéno ;
R⁶ et R^{6'} sont chacun indépendamment de l'hydrogène ou un groupe hydrocarbyle en C₁₋₂₀ contenant de manière facultative un ou plusieurs hétéroatomes provenant des groupes 14-16 ; ou
R⁵ et R⁶ pris ensemble peuvent former un anneau de carbone saturé ou non saturé à 5 ou 6 à éléments fusionné à l'anneau à 6 éléments du groupe indényle ; ou
R^{5'} et R^{6'} pris ensemble peuvent former un anneau de carbone à 5 ou 6 éléments saturé ou non saturé fusionné à l'anneau à 6 éléments du groupe indényle ;
R⁷ et R^{7'} sont chacun indépendamment de l'hydrogène ou un groupe hydrocarbyle en C₁₋₂₀ contenant de manière facultative un ou plusieurs hétéroatomes des groupes 14-16 ;
Ar est indépendamment un groupe aryle ou hétéroaryle ayant jusqu'à 20 atomes de carbone substitués de manière facultative par un ou plusieurs groupes R¹ ;
Ar' est indépendamment un groupe aryle ou hétéroaryle ayant jusqu'à 20 atomes de carbone substitués de manière facultative par un ou plusieurs groupes R¹ ;
chaque R¹ est un groupe hydrocarbyle en C₁₋₂₀ ou deux groupes R¹ sur des atomes de carbone adjacents pris ensemble peuvent former un noyau non aromatique à 5 ou 6 éléments fusionné avec le groupe Ar, ledit noyau étant lui-même substitué de manière facultative par un ou plusieurs groupes R⁴ ; et
chaque R⁴ est un groupe hydrocarbyle en C₁₋₂₀.

12. Processus selon n'importe quelle revendication précédente dans lequel le complexe est de formule (VII) ou (VII') : 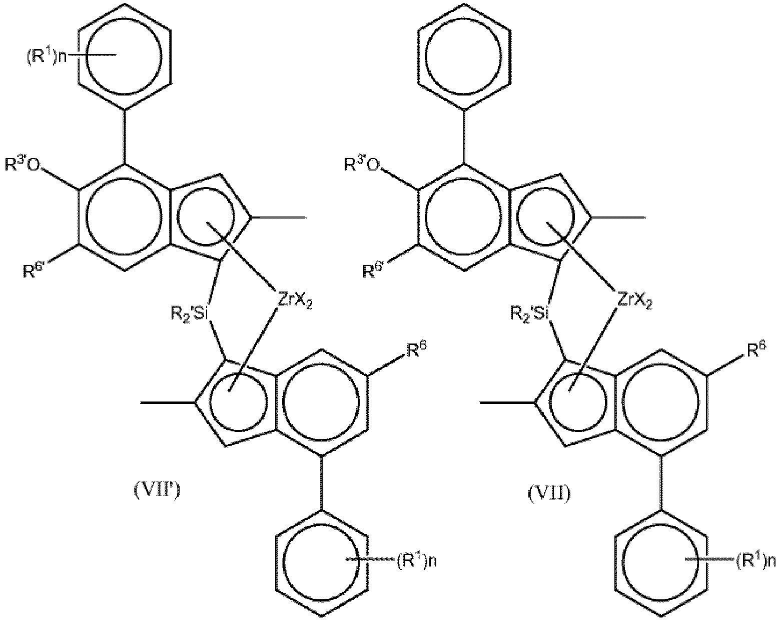
dans lesquelles chaque X est un ligand sigma, de préférence chaque X est indépendamment un atome d'hydrogène, un atome d'halogène, un groupe alcoxy en C₁₋₆, un groupe benzyle, phényle ou alkyle en C₁₋₆ ;
R' est indépendamment un alkyle en C₁₋₆ ou un cycloalkyle en C₃₋₁₀ ;
R¹ est indépendamment un alkyle en C₃₋₈ ;
R⁶ est de l'hydrogène ou un groupe alkyle en C₃₋₈ ;
R^{6'} est un groupe alkyle en C₃₋₈ ou un groupe aryle en C₆₋₁₀ ;
R^{3'} est un groupe alkyle en C₁₋₆, ou un groupe aryle en C₆₋₁₀ substitué de manière facultative par un ou plusieurs groupes halogéno ; et
n est indépendamment 0, 1 ou 2.

13. Processus selon n'importe quelle revendication précédente, dans lequel le rapport vrac sur phase gazeuse de la matière produite (séparation vrac / GP) est inférieur à 60:40 % en poids.

14. Processus selon n'importe quelle revendication précédente ayant une ou deux étapes en phase gazeuse.
